# FASCICULE DE BREVET EUROPEEN

(11) **EP 3 629 629 B1**
(45) Date de publication et mention de la délivrance du brevet: **12.05.2021**
(21) Numéro de dépôt: 19198082.0
(22) Date de dépôt: 18.09.2019
(51) Int. Cl.: H04W 40/36, H04W 40/22

(54) **PROCÉDÉ DE GESTION D'ITINÉRANCE PAR TRANSFERT MULTI-RÉSEAUX**
ROAMING-VERWALTUNGSVERFAHREN DURCH MULTI-NETZWERK-TRANSFER
METHOD OF MANAGING ROAMING BY MULTI-NETWORK TRANSFER

(30) Priorité: 25.09.2018 FR 1871086
(43) Date de publication de la demande: 01.04.2020
(73) Titulaire: Sagemcom Energy & Telecom SAS, 92500 Rueil-Malmaison (FR)
(72) Inventeur: TEBOULLE, Henri, 92500 Rueil Malmaison (FR); LE GOURRIEREC, Marc, 92500 Rueil Malmaison (FR); HARNAY, Franck, 92500 Rueil Malmaison (FR); MOREAU, Guillaume, 92500 Rueil Malmaison (FR)
(74) Mandataire: Cabinet Le Guen Maillet

(56) Documents cités:
- EP-A1- 3 364 607
- US-A1- 2018 124 590
- A. Yegin ET AL: "LoRaWAN Backend Interfaces 1.0 Specification", , 11 octobre 2017 (2017-10-11), XP055532888, Extrait de l'Internet: URL:https://lora-alliance.org/sites/defaul t/files/2018-04/lorawantm-backend-interfac es-v1.0.pdf [extrait le 2018-12-11]
- FARRELL S ET AL: "Low-Power Wide Area Network (LPWAN) Overview; rfc8376.txt", LOW-POWER WIDE AREA NETWORK (LPWAN) OVERVIEW; RFC8376.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 juin 2018 (2018-06-01), pages 1-43, XP015126337, [extrait le 2018-06-01]

## Description

### DOMAINE TECHNIQUE

La présente invention concerne un procédé de gestion d'itinérance par transfert multi-réseaux (« handover roaming » en anglais) dans le cadre d'un réseau de communication reposant sur une technologie de communication de type LPWAN (« Low-Power Wide-Area Network » en anglais).

### ETAT DE LA TECHNIQUE ANTERIEURE

L'Internet des Objets (« Internet of Things » en anglais) émerge. L'Internet des Objets représente l'extension de l'Internet à des choses et à des lieux du monde physique. Alors que l'Internet ne se prolonge habituellement pas au-delà du monde électronique, l'Internet des Objets représente des échanges d'informations et de données provenant de dispositifs présents dans le monde réel vers l'Internet, comme par exemple pour effectuer une collecte de relevés de consommations électriques ou de consommations d'eau. L'Internet des Objets est considéré comme la troisième évolution de l'Internet, baptisée Web 3.0. L'Internet des Objets est en partie responsable de l'accroissement actuel du volume de données à transmettre et à stocker, et est ainsi à l'origine de ce qu'on appelle le « Big Data ». L'Internet des Objets revêt un caractère universel pour désigner une mise en communication d'objets aux usages variés, par exemple dans le domaine industriel, agro-alimentaire, de la e-santé ou de la domotique.

Pour permettre à des objets communicants, aussi appelés dispositifs terminaux, de communiquer dans le cadre de l'Internet des Objets, des systèmes de communications sont mis en place grâce à un ensemble de passerelles de collecte (« gathering gateways » en anglais) qui sont situées sur des points géographiquement hauts et qui sont déployées par un opérateur. Hors opérations de maintenance, ces passerelles de collecte sont typiquement fixes et permanentes, et communiquent avec les dispositifs terminaux par voie radio. On peut par exemple citer sur ce modèle les réseaux SigFox (marque déposée) ou ThingPark (marque déposée). Ces passerelles de collecte communiquent avec les dispositifs terminaux grâce à des communications radio moyenne ou longue portée selon une technologie de communication de type LPWAN, comme par exemple la technologie LoRaWAN (« Long Range Wide-Area Network » en anglais), aussi connue sous le diminutif « LoRa » (« Long Range » en anglais) du nom de l'alliance faisant la promotion de la technologie LoRaWAN. Ces passerelles de collecte servent ainsi de relais entre les dispositifs terminaux et un réseau cœur, typiquement constitué d'un ensemble de serveurs, du système de communication.

Les dispositifs terminaux sont souvent des dispositifs alimentés par batterie et sont donc voués à se mettre en veille autant que possible afin d'améliorer leur autonomie énergétique. Dans ce but, ces dispositifs terminaux appliquent, dans leurs communications indirectes avec le réseau cœur (via une ou plusieurs passerelles de collecte), un mécanisme de communication dit en « Classe A » dans le protocole LoRaWAN. Ce mécanisme consiste à définir, de manière déterministe pour un dispositif terminal considéré et la passerelle de collecte qui agit comme relais pour le réseau cœur, une ou plusieurs fenêtres de réception pendant lesquelles le dispositif terminal considéré écoute le medium de communication où les communications descendantes doivent être effectuées. Une ou plusieurs fenêtres de réception débutent à la fin d'une période de durée prédéfinie d'après un instant de transmission de trame ascendante par le dispositif terminal en question et ont, elles aussi, une durée prédéfinie. Deux fenêtres de réception sont ainsi définies dans le cas du protocole LoRaWAN défini dans la version 1.1 des spécifications du 11 octobre 2017. Une trame descendante qui doit être adressée audit dispositif terminal est alors effectuée dans l'une ou l'autre (le cas échéant) desdites fenêtres de réception, notamment pour effectuer un acquittement de ladite trame ascendante. Il est en effet typiquement nécessaire que le dispositif terminal en question sache que le réseau cœur a effectivement reçu la trame ascendante transmise par ledit dispositif terminal. Cette approche par fenêtres de réception débutant à des instants déterministes pour le dispositif terminal en question et la passerelle de collecte qui agit comme relais pour le serveur permet audit dispositif terminal de se mettre en veille entretemps et de préserver ainsi son autonomie énergétique. A noter qu'il existe une évolution de ce mécanisme de fenêtre de réception, dit en « Classe B » dans le protocole LoRaWAN, qui définit des fenêtres de réception notifiées dans des balises transmises par les passerelles de collecte. Et pour les dispositifs terminaux qui disposent de plus d'autonomie énergétique, un troisième mécanisme est disponible, dit en « Classe C » dans le protocole LoRaWAN, dans lequel les dispositifs terminaux sont supposés écouter en permanence le medium de communication.

A noter que l'on parle de trame ou communication ascendante lorsqu'une trame ou une communication remonte depuis un dispositif terminal vers le réseau cœur, et que l'on parle de trame ou communication descendante dans la direction opposée.

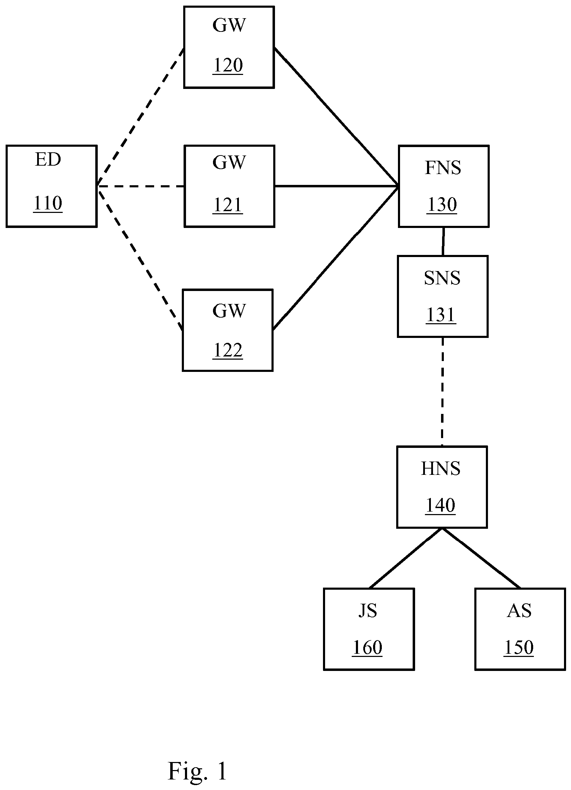

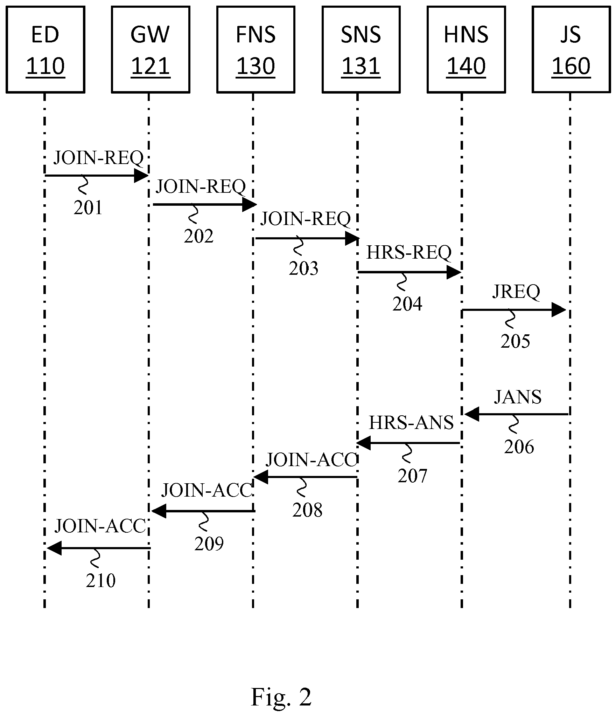

Cependant, il n'est pas certain que le temps d'aller-retour entre les passerelles de collecte et le réseau cœur permette systématiquement de respecter des échéances de réception attendues, plus particulièrement pour les dispositifs terminaux de « Classe A » où les opportunités de communications descendantes sont peu nombreuses. C'est notamment le cas au moment où le dispositif terminal rejoint (« join » en anglais) le système de communication, tout particulièrement dans des situations d'itinérance par transfert multi-réseaux. Cette situation est illustrée par l'échange de messages schématisé sur la Fig. 2 sur la base d'une architecture système schématisée sur la Fig. 1 dans laquelle deux réseaux de deux opérateurs interagissent pour former le système de communication. Elle est à distinguer des situations d'itinérance passive (« passive roaming » en anglais) où la couche MAC (« Médium Access Control » en anglais) est gérée à distance par le réseau cœur de l'opérateur auprès duquel une souscription de service a été effectuée. Un principal avantage de l'itinérance par transfert multi-réseaux est que le plan de contrôle de la couche MAC est géré par le réseau cœur d'accueil, ce qui permet une meilleure adéquation des paramétrages (fréquences porteuses, facteur d'étalement...) des dispositifs terminaux vis-à-vis des conditions effectives de communication avec le réseau cœur d'accueil qui assure le relais avec le réseau cœur de l'opérateur auprès duquel la souscription de service a été effectuée. Par rapport à l'itinérance passive, cela permet d'améliorer la capacité à assurer la continuité des services dans de très bonnes conditions.

La Fig. 1 illustre ainsi schématiquement un système de communication de l'Internet des Objets adapté à l'itinérance par transfert multi-réseaux. Le système de communication comporte un premier réseau de type LPWAN d'un premier opérateur interconnecté à un second réseau de type LPWAN d'un second opérateur. Le premier réseau comporte au moins une passerelle de collecte 120, 121, 122 (notées GW, pour « GateWay » en anglais, sur les Figs.). Les passerelles de collecte 120, 121, 122 disposent de liens de communication respectifs avec un réseau cœur du premier réseau du premier opérateur. Trois passerelles de collecte du premier réseau sont représentées sur la Fig. 1, mais le système de communication peut comporter une quantité différente de passerelles de collecte. Le second réseau comporte lui aussi de telles passerelles de collecte, qui ne sont cependant pas représentées par souci de simplification.

Dans le système de communication, des messages doivent être remontés sous forme de trames depuis un ensemble de dispositifs terminaux (notés ED, pour « End Device » en anglais, sur les Figs.) jusqu'au réseau cœur. Bien que le système de communication comporte deux réseaux, et donc deux réseaux cœurs, ces derniers sont perçus comme un unique réseau cœur par les dispositifs terminaux. En d'autres termes, l'itinérance par transfert multi-réseaux est transparente pour les dispositifs terminaux. Un seul dispositif terminal 110 est représenté sur la Fig. 1 par souci de simplification, mais le système de communication comporte typiquement une grande quantité de dispositifs terminaux.

Tout réseau cœur a un rôle de contrôle et de collecte d'informations disponibles auprès des dispositifs terminaux, et les passerelles de collecte 120, 121, 122 ont un rôle de relais entre les dispositifs terminaux et le réseau cœur. Pour permettre de remplir ce rôle de relais, chaque passerelle de collecte 120, 121, 122 dispose d'au moins une interface radio permettant à ladite passerelle de collecte de communiquer avec au moins un dispositif terminal en s'appuyant sur un medium de communication sans-fil, et préférentiellement selon une technologie de communication de type LPWAN. Ladite interface radio est par exemple de type LoRa permettant ainsi d'implémenter, au sein du système de communication, un protocole de transmission de données de type LoRaWAN. Ladite interface radio est telle qu'un dispositif terminal peut être à portée radio d'une pluralité de passerelles de collecte, selon la position géographique dudit dispositif terminal par rapport aux passerelles de collecte 120, 121, 122 et des conditions radio dans l'environnement dudit dispositif terminal et des passerelles de collecte 120, 121, 122. C'est le cas par exemple du dispositif terminal 110 sur la Fig. 1, qui est à portée radio des passerelles de collecte 120, 121 et 122. De plus, chaque passerelle de collecte 120, 121, 122 dispose d'au moins une autre interface permettant à ladite passerelle de collecte de communiquer avec le réseau cœur. Par exemple, cette autre interface est une interface filaire permettant de communiquer avec le réseau cœur via l'Internet ou une interface radio de type GPRS (« Général Packet Radio Service » en anglais).

Le réseau cœur du premier opérateur est adapté pour effectuer de l'itinérance par transfert multi-réseaux en collaboration avec le réseau cœur du second réseau. Ainsi, le réseau cœur du premier opérateur comporte un premier serveur FNS (« Forward Network Server » en anglais) 130 en charge de gérer les passerelles de collecte 120, 121, 122 pour le compte dudit réseau cœur et d'assurer notamment la déduplication des trames ascendantes reçues de dispositifs terminaux via lesdites passerelles de collecte 120, 121, 122. Le réseau cœur du premier opérateur comporte en outre un second serveur SNS (« Serving Network Server » en anglais) 131 couplé au premier serveur FNS 130. Le second serveur SNS 131 est en charge de contrôler la couche MAC pour les dispositifs terminaux communiquant via les passerelles de collecte 120, 121, 122 qui sont gérées par le premier serveur FNS 130. Le premier serveur FNS 130 et le second serveur SNS 131 peuvent être implémentés dans une même entité matérielle.

Le réseau cœur du second opérateur comporte un troisième serveur HNS (« Home Network Server » en anglais) 140, qui est le serveur qui coordonne le réseau cœur du second opérateur. Ce troisième serveur HNS 140 est l'équivalent dans le second réseau du second serveur SNS 131 dans le premier réseau. D'ailleurs, le second réseau comporte typiquement aussi un serveur équivalent au serveur FNS 130, couplé au troisième serveur HNS 140, et qui gère les passerelles de collecte du second réseau.

Le réseau cœur du second opérateur comporte en outre un quatrième serveur AS 150, qui implémente une application avec laquelle le dispositif terminal 110 communique, i.e., échange des données applicatives, dans le cadre de la souscription de service. Le réseau cœur du second opérateur peut comporter une pluralité de tels quatrièmes serveurs AS 150. Enfin, le réseau cœur du second opérateur comporte en outre un cinquième serveur JS 160, en charge de la gestion des souscriptions des dispositifs terminaux afin de faire les vérifications de souscription nécessaires pour leur permettre de bénéficier des services du quatrième serveur AS 150 lorsque lesdits dispositifs terminaux cherchent à rejoindre le système de communication.

Le quatrième serveur AS 150 et le cinquième serveur JS 160 sont déclarés auprès du troisième serveur HNS 140, et sont ainsi connectés au troisième serveur HNS 140. Le second serveur SNS 131 communique avec le troisième serveur HNS 140 qui sert de relais avec le quatrième serveur AS 150 et le cinquième serveur JS 160 dans le cadre des communications avec le dispositif terminal 110. En d'autres termes, le troisième serveur HNS 140 est en charge d'interfacer le quatrième serveur AS 150 et le cinquième serveur JS 160 avec le premier réseau et plus particulièrement avec le second serveur SNS 131.

Il existe toutefois des situations où le second serveur SNS 131 du premier opérateur communique directement avec le cinquième serveur JS 160 du second opérateur, particulièrement lorsque le second serveur SNS 131 ne connaît pas encore l'identité du troisième serveur HNS 140 au moment où le dispositif terminal 110 rejoint en itinérance le réseau par le biais du premier serveur FNS 130. Dans ce cas, le second serveur SNS 131 utilise un identifiant, appelé JoinEUI dans les spécifications LoRaWAN 1.1, qui identifie de manière unique le cinquième serveur JS 160 et que le dispositif terminal 110 inclut dans un message que ledit dispositif terminal 110 transmet pour rejoindre le réseau. Le second serveur SNS 131 contacte alors un sixième serveur DNS (« Domain Name Server » en anglais) en charge d'effectuer des résolutions de noms de domaine. Ce sixième serveur DNS (non représenté) fournit alors au second serveur SNS 131 une adresse pour contacter le cinquième serveur JS 160 d'après l'identifiant unique en question. Le second serveur SNS 131 fournit alors au cinquième serveur JS 160 un autre identifiant, appelé DevEUI dans les spécifications LoRaWAN 1.1, qui identifie de manière unique le dispositif terminal 110 afin que le cinquième serveur JS 160 fournisse en conséquence l'identité du troisième serveur HNS 140 en retour, car un même serveur JS 160 peut interagir avec au moins un autre serveur équivalent au troisième serveur HNS 140.

A noter que d'autres liens de communication (non illustrés, par souci de simplification) entre les serveurs peuvent exister au sein de chacun des premier et second réseaux, notamment entre le quatrième serveur AS 150 et le cinquième serveur JS 150.

Lorsque le dispositif terminal 110 rejoint en itinérance par transfert multi-réseaux le système de communication, des échanges de messages sont effectués, comme illustré schématiquement sur la **Fig. 2****.**

Dans une étape 201, le dispositif terminal 110 transmet un message JOIN-REQ via son interface radio. Ce message est appelé Join-request dans les spécifications LoRaWAN 1.1. Comme indiqué précédemment, ce message JOIN-REQ inclut un identifiant unique du dispositif terminal 110 et un identifiant unique du cinquième serveur JS 160. Ce message JOIN-REQ est capté par au moins une passerelle de collecte 120, 121, 122. Considérons que ce message JOIN-REQ a été capté par la passerelle de collecte 121. Cette dernière relaie alors, dans une étape 202, le message JOIN-REQ au premier serveur FNS 130 auquel ladite passerelle de collecte 121 est rattachée. Le premier serveur FNS 130 relaie alors le message JOIN-REQ au second serveur SNS 131 dans une étape 203. Le second serveur SNS 131 détecte que le message JOIN-REQ concerne un dispositif terminal en itinérance. Le second serveur SNS 131 relaie alors le message JOIN-REQ au troisième serveur HNS 140, sous la forme d'un message HRS-REQ, dans une étape 204. Ce message est appelé HRStartReq dans les spécifications LoRaWAN Backend Interfaces 1.0, qui traitent de l'itinérance dans le contexte des spécifications LoRaWAN 1.1. Ce message HRS-REQ contient typiquement des informations complémentaires de gestion de couche MAC par le second serveur SNS 131. Ensuite, dans une étape 205, le troisième serveur HNS 140 relaie le message JOIN-REQ, sous la forme d'un message JREQ, au cinquième serveur JS 160. Ce message est appelé JoinReq dans les spécifications LoRaWAN 1.1. Ce message JREQ contient typiquement une partie des informations complémentaires de gestion de couche MAC contenues dans le message HRS-REQ. Le cinquième serveur JS 160 effectue alors l'authentification du dispositif terminal 110 et en cas d'authentification réussie, génère les clefs de sécurité nécessaires au dispositif terminal 110 pour communiquer dans le système de communication et bénéficier des services du quatrième serveur AS 150.

Puis, un retour est fourni au dispositif terminal 110 en itinérance. Pour ce faire, le cinquième serveur JS 160 transmet au troisième serveur HNS 140, dans une étape 206, un message JANS en réponse au message JREQ. Ce message est appelé JoinAns dans les spécifications LoRaWAN 1.1. Le message JANS inclut un message JOIN-ACC à relayer au dispositif terminal 110, et dans le cas où le dispositif terminal 110 est effectivement authentifié par le cinquième serveur JS 160, les clefs de sécurité permettant d'assurer des échanges sécurisés avec le dispositif terminal 110, y compris, sous forme chiffrée par une clef connue du dispositif terminal 110, la clef de sécurité à utiliser pour communiquer avec le quatrième serveur AS 150. Le message JOIN-ACC est appelé Join-accept dans les spécifications LoRaWAN 1.1. Le message JANS répète les clefs de sécurité permettant au dispositif terminal 110 de communiquer dans le système de communication, de manière que les communications du dispositif terminal 110 puissent être gérées par le réseau cœur du premier opérateur (à l'exception donc de la clef de sécurité permettant au dispositif terminal 110 de communiquer avec le quatrième serveur AS 150). Dans une étape 207, le troisième serveur HNS 140 transmet au second serveur SNS 131 un message HRS-ANS en réponse au message HRS-REQ, qui inclut le contenu du message JANS ainsi que des informations de profil de service relatif au dispositif terminal 110 en itinérance. Ce message est appelé HRStartAns dans les spécifications LoRaWAN Backend Interfaces 1.0. Dans une étape 208, le second serveur SNS 131 relaie au premier serveur FNS 130 le message JOIN-ACC créé par le cinquième serveur JS 160. Puis, dans une étape 209, le premier serveur FNS 130 sélectionne la passerelle de collecte en charge de relayer le message JOIN-ACC au dispositif terminal 110 et lui fait suivre ledit message JOIN-ACC. Considérons que le premier serveur FNS 130 sélectionne pour ce faire la passerelle de collecte 121. Alors, dans une étape 210, la passerelle de collecte 121 relaie par voie radio ledit message JOIN-ACC à l'attention du dispositif terminal 110

Le document US2018/124590A1 divulgue un procédé de gestion d'itinérance par transfert multi-réseaux (roaming) dans un système de communication comportant un premier réseau de type LPWAN d'un premier opérateur et un second réseau de type LPWAN d'un second opérateur. Lorsqu'une passerelle de collecte du premier réseau (LPWAN1) détecte un dispositif terminal (IoT device 102) du second opérateur demandant à rejoindre le système de communication pour bénéficier des services IoT, ladite passerelle de collecte court-circuite les serveurs en local (Network Server 1 116, Application Servers 131, 132) pour communiquer avec un serveur du second réseau de type LPWAN (Network Server 2) via une passerelle d'interconnexion (Interconnect Gateway 140). Ce serveur du second réseau de type LPWAN (Network Server 2) peut faire suivre la demande à un serveur d'applications (application servers 136) concerné.

De ce qui précède, il apparaît que la gestion d'itinérance par transfert multi-réseaux implique de nombreux relais de messages, notamment entre les différents serveurs impliqués. Ces relais impliquent des latences d'exécution qui viennent s'ajouter à des latences de traitement significatives de la part des serveurs, notamment en ce qui concerne le cinquième serveur JS 160. Ces relais de messages sont alors parfois difficilement compatibles avec des échéances de latence à respecter, particulièrement dans le cas des fenêtres de réception susmentionnées, ce qui entraîne que les dispositifs terminaux peuvent avoir à faire face à de grandes difficultés pour rejoindre le réseau, du fait qu'ils ne reçoivent pas de réponse du réseau cœur dans le temps imparti.

Il est souhaitable de pallier ces inconvénients de l'état de la technique. Il est notamment souhaitable d'augmenter les chances pour les dispositifs terminaux de rejoindre avec succès le réseau en cas d'itinérance par transfert multi-réseaux. Il est aussi souhaitable d'augmenter les chances pour les dispositifs terminaux que les communications s'effectuent dans des temps impartis. Il est aussi souhaitable de pouvoir s'appuyer sur des formats de message existants dans les spécifications LoRaWAN 1.1.

### EXPOSE DE L'INVENTION

A cet effet, il est proposé un procédé de gestion d'itinérance par transfert multi-réseaux dans un système de communication comportant un premier réseau de type LPWAN d'un premier opérateur et un second réseau de type LPWAN d'un second opérateur. Le premier réseau comporte : des passerelles de collecte, un premier serveur en charge de gérer lesdites passerelles de collecte ; et un second serveur, couplé au premier serveur, en charge de contrôler la couche MAC pour des dispositifs terminaux communiquant via lesdites passerelles de collecte. Le second réseau comporte : un troisième serveur en charge d'interfacer un quatrième serveur et un cinquième serveur avec le second serveur du premier réseau ; le quatrième serveur, qui implémente une application avec laquelle au moins un dispositif terminal du second opérateur échange des données applicatives dans le cadre d'une souscription de services définie auprès du second opérateur ; et le cinquième serveur, en charge d'authentifier tout dispositif terminal cherchant à rejoindre le système de communication pour bénéficier des services du quatrième serveur. Le procédé est tel que le système de communication transporte des trames ascendantes incluant des données applicatives depuis ledit au moins un dispositif terminal du second opérateur jusqu'au quatrième serveur par relais successifs des premier, second et troisième serveurs lorsque ledit au moins un dispositif terminal du second opérateur est authentifié et en outre que lesdites trames ascendantes sont captées par au moins une passerelle de collecte du premier réseau. De plus, le procédé est tel que chaque passerelle de collecte du premier réseau ayant détecté un dispositif terminal du second opérateur demandant à rejoindre le système de communication pour bénéficier des services du quatrième serveur communique avec le cinquième serveur pour authentifier ledit dispositif terminal du second opérateur détecté, en court-circuitant les premier, second et troisième serveurs. Ainsi, les chances pour les dispositifs terminaux du second opérateur de rejoindre avec succès le système de communication en cas d'itinérance par transfert multi-réseaux sont augmentées par réduction significative de latence en court-circuitant les premier, second et troisième serveurs.

Selon un mode de réalisation particulier, le premier réseau disposant d'une plage d'adresses pour tous les dispositifs terminaux accédant au système de communication via les passerelles de collecte du premier réseau, le cinquième serveur gère un sous-ensemble prédéterminé d'adresses de la plage d'adresses du premier réseau et attribue une adresse parmi ledit sous-ensemble prédéterminé d'adresses à tout dispositif terminal du second opérateur qui est en itinérance par transfert multi-réseaux via le premier réseau et qui est authentifié par le cinquième serveur. Ainsi, l'adressage des dispositifs terminaux dans le premier réseau reste cohérent bien que les premier, second et troisième serveurs soient court-circuités pour authentifier les dispositifs terminaux du second opérateur.

Selon un mode de réalisation particulier, les communications avec chaque dispositif terminal authentifié du second opérateur étant chiffrées, le cinquième serveur fournit les clefs de sécurité nécessaires auxdites communications chiffrées, et lorsqu'une passerelle de collecte du premier réseau reçoit un message du cinquième serveur indiquant qu'un dispositif terminal du second opérateur a été authentifié avec succès et incluant lesdites clefs de sécurité, ladite passerelle de collecte du premier réseau relaie les clefs de sécurité au premier serveur. Ainsi, les chiffrements et déchiffrements de communications peuvent être confiés à une autre entité que la passerelle de collecte du premier réseau à laquelle le cinquième serveur a répondu.

Selon un mode de réalisation particulier, le premier serveur relaie les clefs de sécurité au second serveur. Ainsi, les chiffrements et déchiffrements de communications peuvent être mis en place au niveau du second serveur bien que les premier, second et troisième serveurs soient court-circuités pour authentifier ledit dispositif terminal du second opérateur.

Selon un mode de réalisation particulier, pour demander à rejoindre le système de communication pour bénéficier des services du quatrième serveur, chaque dispositif terminal du second opérateur envoie un message incluant un identifiant qui identifie de manière unique le cinquième serveur, et chaque passerelle de collecte du premier réseau captant ledit message détermine à quelle adresse contacter le cinquième serveur grâce à une association préalablement stockée en mémoire entre ledit identifiant et l'adresse pour contacter le cinquième serveur. Ainsi, chaque passerelle de collecte du premier réseau peut déterminer de manière simple que le cinquième serveur doit être directement contacté et comment contacter le cinquième serveur.

Selon un mode de réalisation particulier, sur configuration de chaque passerelle de collecte du premier réseau avec l'identifiant qui identifie de manière unique le cinquième serveur, ladite passerelle de collecte du premier réseau demande à un sixième serveur, en charge d'effectuer des résolutions de noms de domaine, de fournir l'adresse pour contacter le cinquième serveur grâce audit identifiant qui identifie de manière unique le cinquième serveur. Ainsi, chaque passerelle de collecte du premier réseau a anticipé le besoin de contacter le cinquième serveur pour gérer les dispositifs terminaux du second opérateur en itinérance par transfert multi-réseaux, ce qui réduit d'autant la latence de traitement au moment où un dispositif terminal du second opérateur souhaite rejoindre le système de communication par itinérance par transfert multi-réseaux.

Selon un mode de réalisation particulier, sur configuration du premier serveur avec l'identifiant qui identifie de manière unique le cinquième serveur, le premier serveur demande à un sixième serveur, en charge d'effectuer des résolutions de noms de domaine, de fournir l'adresse pour contacter le cinquième serveur grâce audit identifiant qui identifie de manière unique le cinquième serveur, et le premier serveur propage une association dudit identifiant et de ladite adresse à chaque passerelle de collecte du premier réseau. Ainsi, la procédure pour initialiser les passerelles de collecte du premier réseau dans le cadre de l'itinérance par transfert multi-réseaux est simple et efficace.

Selon un mode de réalisation particulier, lorsque le cinquième serveur reçoit plusieurs copies d'un même message qui émane d'un dispositif terminal du second opérateur et qui demande à rejoindre le système de communication, le cinquième serveur effectue une déduplication de données et répond à la première copie en séquence dudit message. Ainsi, la gestion des remontées parallèles des copies de messages par différentes passerelles de collecte du premier réseau est simple bien que les premier, second et troisième serveurs soient court-circuités pour authentifier ledit dispositif terminal du second opérateur.

Selon un mode de réalisation particulier, lorsqu'une passerelle de collecte du premier réseau reçoit un message du cinquième serveur indiquant qu'un dispositif terminal du second opérateur a été authentifié avec succès, ladite passerelle de collecte du premier réseau active une délégation et notifie en conséquence le premier serveur, la délégation comportant les étapes suivantes : affecter un tampon audit dispositif terminal du second opérateur et y stocker des données utiles ultérieurement reçues de manière asynchrone via le premier serveur à l'attention dudit dispositif terminal du second opérateur ; acquitter toute trame ascendante ultérieurement reçues depuis ledit dispositif terminal du second opérateur en construisant et en transmettant, pour le compte du second serveur, des trames descendantes incluant des acquittements respectifs desdites trames ascendantes et incluant, le cas échéant, des données utiles stockées dans le tampon affecté audit dispositif terminal du second opérateur ; et relayer la trame ascendante vers le premier serveur. De plus, sur réception d'une trame descendante à l'attention dudit dispositif terminal du second opérateur, ladite passerelle de collecte du premier réseau place les données utiles, fournies dans la trame descendante, dans le tampon affecté audit dispositif terminal du second opérateur. Ainsi, les chances pour les dispositifs terminaux du second opérateur que leurs communications dans le système de communication s'effectuent dans des temps impartis sont augmentées.

Selon un mode de réalisation particulier, chaque passerelle de collecte du premier réseau qui reçoit, en provenance du premier serveur, un ordre de désactivation de la délégation vis-à-vis d'un dispositif terminal du second opérateur effectue les étapes suivantes : si le tampon affecté au dispositif terminal du second opérateur est vide, confirmer auprès du premier serveur que ladite passerelle de collecte du premier réseau a désactivé la délégation vis-à-vis dudit dispositif terminal du second opérateur ; et si le tampon affecté audit dispositif terminal du second opérateur n'est pas vide, maintenir la délégation jusqu'à ce que ledit tampon soit vidé par construction et transmission de dites trames descendantes par ladite passerelle de collecte du premier réseau. Ainsi, la désactivation de la délégation s'effectue de manière simple et cohérente.

Selon un mode de réalisation particulier, chaque passerelle de collecte du premier réseau ayant activé la délégation vis-à-vis d'un dispositif terminal du second opérateur incrémente une valeur d'un compteur de trames descendantes au fil des constructions desdites trames descendantes à l'attention dudit dispositif terminal du second opérateur et inclut dans lesdites trames descendantes la valeur incrémentée du compteur de trames descendantes, et lorsque ladite passerelle de collecte du premier réseau désactive la délégation, ladite passerelle de collecte du premier réseau notifie au premier serveur une valeur à jour du compteur de trames descendantes. Ainsi, le comptage des trames descendantes s'effectue de manière transparente pour le dispositif terminal du second opérateur en question.

Un autre objet de l'invention est un système de communication comportant un premier réseau de type LPWAN d'un premier opérateur et un second réseau de type LPWAN d'un second opérateur. Le premier réseau comporte : des passerelles de collecte ; un premier serveur en charge de gérer lesdites passerelles de collecte ; et un second serveur, couplé au premier serveur, en charge de contrôler la couche MAC pour des dispositifs terminaux communiquant via lesdites passerelles de collecte. Le second réseau comporte : un troisième serveur en charge d'interfacer un quatrième serveur et un cinquième serveur avec le second serveur du premier réseau ; le quatrième serveur, qui implémente une application avec laquelle au moins un dispositif terminal du second opérateur échange des données applicatives dans le cadre d'une souscription de services définie auprès du second opérateur ; et le cinquième serveur, en charge d'authentifier tout dispositif terminal cherchant à rejoindre le système de communication pour bénéficier des services du quatrième serveur. Le système de communication est agencé, dans le cadre d'une gestion d'itinérance par transfert multi-réseaux entre le premier réseau et le second réseau, pour transporte des trames ascendantes incluant des données applicatives depuis ledit au moins un dispositif terminal du second opérateur jusqu'au quatrième serveur par relais successifs des premier, second et troisième serveurs lorsque ledit au moins un dispositif terminal du second opérateur est authentifié et en outre que lesdites trames ascendantes sont captées par au moins une passerelle de collecte du premier réseau. De plus, chaque passerelle de collecte du premier réseau ayant détecté un dispositif terminal du second opérateur demandant à rejoindre le système de communication pour bénéficier des services du quatrième serveur est agencée pour communiquer avec le cinquième serveur pour authentifier ledit dispositif terminal du second opérateur détecté, en court-circuitant les premier, second et troisième serveurs

L'invention est définie par les revendications indépendantes jointes.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un système de communication de l'Internet des Objets selon l'état de la technique ;
[Fig. 2] illustre schématiquement des échanges de messages survenant dans le système de communication de l'Internet des Objets de la Fig. 1 ;
[Fig. 3] illustre schématiquement un système de communication de l'Internet des Objets dans lequel la présente invention peut être implémentée ;
[Fig. 4] illustre schématiquement des échanges de messages survenant dans le système de communication de l'Internet des Objets de la Fig. 3 ;
[Fig. 5] illustre schématiquement une architecture matérielle de dispositif de communication dans le système de communication de l'Internet des Objets de la Fig. 3 ;
[Fig. 6] illustre schématiquement un algorithme d'activation de délégation ;
[Fig. 7] illustre schématiquement un algorithme de traitement de trame ascendante ; et
[Fig. 8] illustre schématiquement un algorithme de traitement de trame descendante.

### EXPOSE DETAILLE DE MODES DE REALISATION

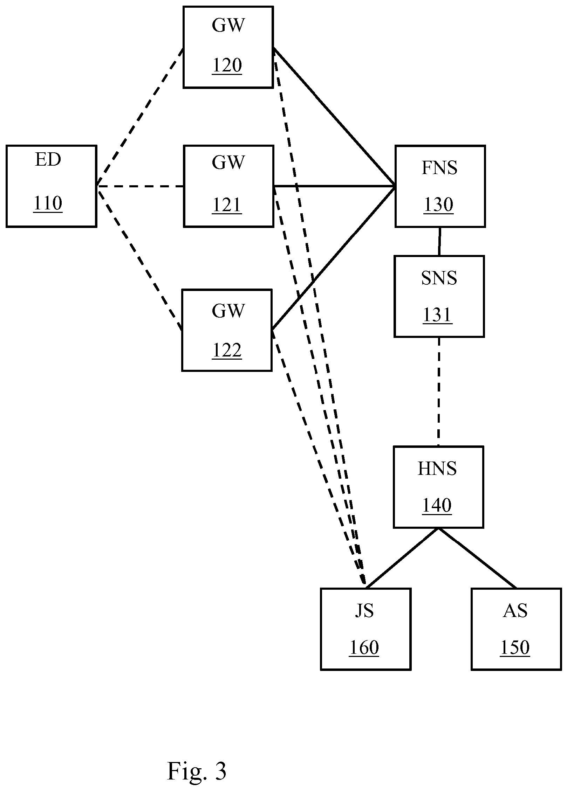

La **Fig. 3** illustre schématiquement un système de communication de l'Internet des Objets dans lequel la présente invention peut être implémentée. Le système de communication de l'Internet des Objets de la Fig. 3 reprend le système de communication de l'Internet des Objets de la Fig. 1 et y ajoute des connexions entre les passerelles de collecte 120, 121, 122 du premier réseau d'un côté et le cinquième serveur JS 160 du second réseau d'un autre côté. Le cinquième serveur JS 160 est déclaré auprès de chacune des passerelles de collecte 120, 121, 122, qui sont ainsi connectées au cinquième serveur JS 160. Cette déclaration du cinquième serveur JS 160 auprès de chacune des passerelles de collecte 120, 121, 122 est faite à la suite d'un accord d'itinérance conclu entre le premier opérateur et le second opérateur. Le même type de support de communication peut être utilisé entre les passerelles de collecte 120, 121, 122 et le cinquième serveur JS 160 qu'entre les passerelles de collecte 120, 121, 122 et le premier serveur FNS 130. Un autre type de support de communication peut toutefois être utilisé.

Comme détaillé ci-après, cette relation directe entre les passerelles de collecte 120, 121, 122 et le cinquième serveur JS 160 permet de simplifier les échanges de messages en court-circuitant les premier FNS 130, second SNS 131 et troisième HNS 140 serveurs, et donc réduire la latence induite, lorsque le dispositif terminal 110 rejoint en itinérance par transfert multi-réseaux le système de communication.

La déclaration du cinquième serveur JS 160 auprès de chacune des passerelles de collecte 120, 121, 122 consiste à fournir l'identifiant, appelé JoinEUI dans les spécifications LoRaWAN 1.1, qui identifie de manière unique le cinquième serveur JS 160. Pour rappel, cet identifiant est inclus par le dispositif terminal 110 dans le message JOIN-REQ que ledit dispositif terminal 110 transmet pour rejoindre le système de communication, et il est donc nécessaire que chaque passerelle de collecte qui doit interagir directement avec le cinquième serveur JS 160 le connaisse au préalable pour faire le lien entre le dispositif terminal 110 en itinérance et le cinquième serveur JS 160.

Dans un mode de réalisation particulier, à la suite de cette déclaration, chacune des passerelles de collecte 120, 121, 122 contacte alors le sixième serveur DNS, qui leur fournit une adresse pour contacter le cinquième serveur JS 160 d'après l'identifiant unique en question.

Dans un mode de réalisation particulier en variante, la déclaration est telle que l'identifiant unique en question est fourni en association avec l'adresse pour contacter le cinquième serveur JS 160.

Dans un mode de réalisation particulier, la déclaration est d'abord faite auprès du premier serveur FNS 130 à la suite de l'accord d'itinérance conclu entre le premier opérateur et le second opérateur, et le premier serveur FNS 130 fait suivre la déclaration en question à chacune des passerelles de collecte 120, 121, 122. Cela simplifie la déclaration du cinquième serveur JS 160. A noter qu'une possibilité est que le premier serveur FNS 130 contacte le sixième serveur DNS, qui lui fournit l'adresse pour contacter le cinquième serveur JS 160 d'après l'identifiant unique en question, et que le premier serveur FNS 130 transmette alors à chacune des passerelles de collecte 120, 121, 122 l'identifiant unique en question en association avec l'adresse pour contacter le cinquième serveur JS 160.

A noter que les communications entre les passerelles de collecte et tout serveur, et entre les serveurs eux-mêmes, reposent préférentiellement sur le protocole IP (« Internet Protocol » en anglais), tel que défini dans le document normatif RFC 791.

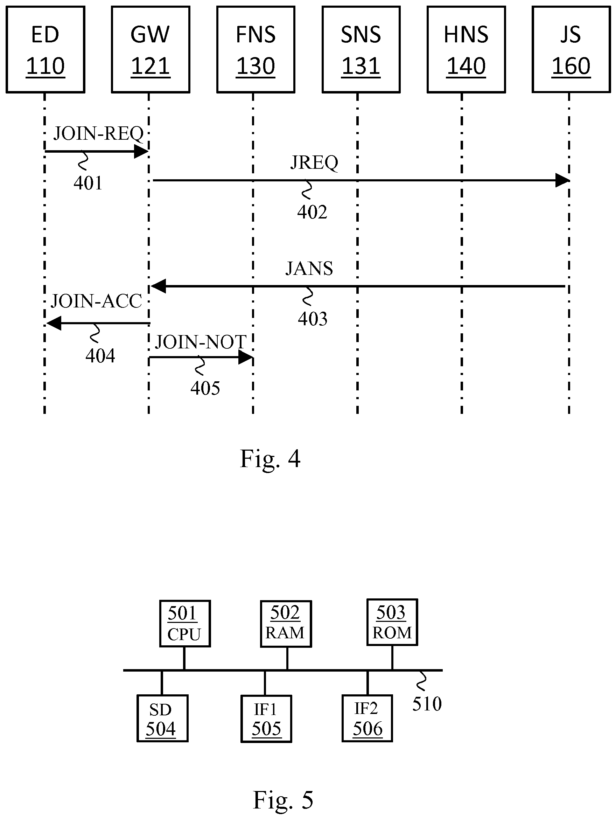

La Fig. 4 illustre schématiquement des échanges de messages survenant dans le système de communication de l'Internet des Objets de la Fig. 3, lorsque le dispositif terminal 110 rejoint en itinérance par transfert multi-réseaux le système de communication. Ces messages sont échangés dans des trames respectives.

Dans une étape 401, le dispositif terminal 110 transmet un message JOIN-REQ via son interface radio. Cette étape est identique à l'étape 201 décrite en relation avec la Fig. 2. Ce message JOIN-REQ inclut donc un identifiant unique du dispositif terminal 110, appelé DevEUI dans les spécifications LoRaWAN 1.1, ainsi que l'identifiant unique du cinquième serveur JS 160.

Ce message JOIN-REQ est capté par au moins une passerelle de collecte 120, 121, 122. Considérons que ce message JOIN-REQ est capté par la passerelle de collecte 121. Dans une étape 402, la passerelle de collecte 121 relaie directement le message JOIN-REQ au cinquième serveur JS 160, sous la forme d'un message JREQ tel que précédemment évoqué. Le premier serveur FNS 130, le second serveur SNS 131 et le troisième serveur HNS 140 sont ainsi court-circuités. Grâce à l'identifiant qui est contenu dans le message JOIN-REQ et qui identifie de manière unique le cinquième serveur JS 160, la passerelle de collecte 121 détecte que le dispositif terminal 110 est en itinérance et que le réseau cœur du second opérateur est en charge de vérifier que le dispositif terminal 110 dispose d'une souscription adaptée, et préférentiellement d'authentifier le dispositif terminal 110, c'est-à-dire de confirmer que le dispositif terminal ayant transmis le message JOIN-REQ est effectivement le dispositif terminal 110 correspondant à l'identifiant unique fourni.

Dans le cas particulier des formats de messages définis dans les spécifications LoRaWAN 1.1., le message JREQ prend la forme d'un message JoinReq. La passerelle de collecte 121 recopie dans un champ dédié du message JoinReq l'identifiant unique de dispositif terminal, appelé DevEUI, que le dispositif terminal 110 en itinérance a inscrit dans le message Join-request transmis à l'étape 401. De plus, les valeurs des champs MACversion, DLSettings et RxDelay sont fixées à des valeurs par défaut. A noter que les valeurs DLSettings et RxDelay peuvent être modifiées ultérieurement auprès du dispositif terminal 110 par commande MAC en provenance du second serveur SNS 131, pour les ajuster aux besoins effectifs du réseau cœur du premier opérateur.

Sur réception du message JREQ, le cinquième serveur JS 160 vérifie que le dispositif terminal 110 dispose d'une souscription adaptée pour accéder aux services du quatrième serveur AS 150 en itinérance par transfert multi-réseaux. Préférentiellement, le cinquième serveur JS 160 effectue l'authentification du dispositif terminal 110. Dans un mode de réalisation particulier, en cas d'authentification réussie, le cinquième serveur JS 160 obtient (e.g., génère) les clefs de sécurité nécessaires au dispositif terminal 110 pour communiquer de manière chiffrée dans le système de communication et bénéficier des services du quatrième serveur AS 150.

Le cinquième serveur JS 160 construit un message JANS qui inclut un message JOIN-ACC à relayer au dispositif terminal 110. Lorsque les communications ultérieures avec le dispositif terminal 110 doivent être chiffrées et que le dispositif terminal 110 est effectivement authentifié par le cinquième serveur JS 160, le message JOIN-ACC inclut aussi les informations permettant au dispositif terminal 110 d'obtenir les clefs de sécurité permettant de sécuriser les échanges avec le dispositif terminal 110. Le message JOIN-ACC inclut préférentiellement aussi, sous forme chiffrée par une clef connue du dispositif terminal 110, la clef de sécurité à utiliser pour communiquer avec le quatrième serveur AS 150. Cette dernière clef de sécurité est chiffrée car elle n'a pas à être connue des passerelles de collecte 120, 121, 122, ni du réseau cœur du premier opérateur. Le message JANS peut aussi inclure, ailleurs que dans le message JOIN-ACC, les clefs de sécurité permettant de sécuriser les échanges avec le dispositif terminal 110 (à l'exception donc de la clef de sécurité permettant au dispositif terminal 110 de communiquer avec le quatrième serveur AS 150). Cela simplifie la récupération de ces clefs de sécurité par la passerelle de collecte à laquelle le message JANS va être adressé.

Lorsque les formats de messages définis dans les spécifications LoRaWan 1.1 sont utilisés, le cinquième serveur JS 160 peut modifier les valeurs par défaut proposées dans les champs MACversion, DLSettings et RxDelay du message JREQ transmis par la passerelle de collecte 121. C'est notamment le cas lorsque les accords d'itinérance conclus entre le premier opérateur et le second opérateur définissent des valeurs par défaut à utiliser et que ces valeurs par défaut sont inscrites en mémoire du cinquième serveur JS 160 du second opérateur sans qu'il n'y ait besoin de les inscrire en mémoire des passerelles de collecte du premier opérateur. Comme déjà indiqué, les valeurs DLSettings et RxDelay peuvent être modifiées ultérieurement auprès du dispositif terminal 110 par commande MAC en provenance du second serveur SNS 131, pour les ajuster aux besoins effectifs du réseau cœur du premier opérateur.

Dans un mode de réalisation particulier, pour pouvoir communiquer dans le système de communication, le dispositif terminal 110 doit se voir attribuer dynamiquement une adresse, appelée DevAddr dans les spécifications LoRaWan 1.1. Dans le cadre d'une itinérance selon l'architecture de la Fig. 1, cette adresse est attribuée par le second serveur SNS 131. Ici, comme le second serveur SNS 131 n'est pas impliqué dans le relais du message JOIN-REQ, c'est au cinquième serveur JS 160 d'attribuer cette adresse. Pour ce faire, la gestion d'un sous-ensemble prédéterminé de la plage d'adresses du premier opérateur est exclusivement confiée au cinquième serveur JS 160 du second opérateur dans le cadre de l'accord d'itinérance. On parle de provisionnement (« provisioning » en anglais) d'adresses. Le cinquième serveur JS 160 attribue alors une adresse dudit sous-ensemble prédéterminé de la plage d'adresses du premier opérateur lorsque ledit cinquième serveur JS 160 authentifie avec succès un dispositif terminal en itinérance, et indique dans le message JOIN-ACC quelle adresse a été ainsi attribuée. Ce provisionnement d'adresses peut être configuré auprès du second serveur SNS 131 et du cinquième serveur JS 160 à la suite de l'accord d'itinérance. En variante, la plage d'adresses du premier opérateur dont la gestion est confiée au cinquième serveur JS 160 du second opérateur est négociée par échanges de messages entre le second serveur SNS 131 et le cinquième serveur JS 160.

Le cinquième serveur JS 160 doit alors distinguer les cas où ledit cinquième serveur JS 160 doit attribuer une adresse (dispositif terminal en itinérance) des cas où ledit cinquième serveur JS 160 ne doit pas attribuer d'adresse (dispositif terminal qui n'est pas en itinérance). Pour ce faire, le format des messages JREQ envoyés par les passerelles de collecte peut être distinct du format des messages JREQ envoyés par le troisième serveur HNS 140, i.e., de format différent. Une valeur spécifique d'un champ de message JREQ peut en variante être réservée aux passerelles de collecte et interdite au troisième serveur HNS 140. Dans une autre variante, le cinquième serveur JS 160 ayant connaissance de l'adresse du troisième serveur HNS 140, le cinquième serveur JS 160 est capable de détecter qu'un message JREQ reçu est issu d'un autre équipement que le troisième serveur HNS 140 et décider le cas échéant d'attribuer une adresse parmi les adresses provisionnées.

Ensuite, dans une étape 403, le cinquième serveur JS 160 transmet le message JANS en réponse au message JREQ reçu à l'étape 402. Le cinquième serveur JS 160 répond ainsi directement à la passerelle de collecte 121.

Puis, dans une étape 404, la passerelle de collecte 121 relaie par voie radio le message JOIN-ACC à l'attention du dispositif terminal 110. La passerelle de collecte 121 récupère dans le message JOIN-ACC l'adresse attribuée au dispositif terminal 110 par le cinquième serveur DNS 160. La passerelle de collecte 121 récupère aussi dans le message JANS, le cas échéant, les clefs de sécurité utiles au premier réseau cœur. Dans une étape 405, la passerelle de collecte 121 informe le réseau cœur du premier opérateur que le message JOIN-ACC a été transmis au dispositif terminal 110. Pour ce faire, la passerelle de collecte 121 transmet au premier serveur FNS 130 un message de notification JOIN-NOT incluant l'identifiant unique du dispositif terminal 110, ainsi que l'adresse attribuée par le cinquième serveur JS 160 au dispositif terminal 110. Le réseau cœur du premier réseau est ainsi informé de la présence du dispositif terminal 110 en itinérance.

Dans le cas où les communications ultérieures avec le dispositif terminal 110 doivent être chiffrées, le message de notification JOIN-NOT inclut les clefs de sécurité récupérées par la passerelle de collecte 121. Cela permet au réseau cœur du premier réseau d'authentifier et de déchiffrer les communications du dispositif terminal 110 pour le compte du second opérateur dans le cadre de l'itinérance par transfert multi-réseaux. Charge au premier serveur FNS 130 de faire suivre les informations adéquates au second serveur SNS 131 (non représenté sur la Fig. 4). Dans le cas où une délégation (telle que décrite ci-après) est mise en place, cela permet aussi au réseau cœur du premier réseau de confier la délégation à une autre passerelle de collecte.

Dans le cas où le message JOIN-REQ est capté par au moins une autre passerelle de collecte parmi les passerelles de collecte 120, 122, chaque dite autre passerelle de collecte relaie aussi le message JOIN-REQ au cinquième serveur JS 160, de la même manière que décrite ci-dessus vis-à-vis de la passerelle de collecte 121. Dans le cas d'un message Join-request selon les spécifications LoRaWAN 1.1, il est par exemple possible pour le cinquième serveur JS 160 de détecter cette situation en notant que le champ « Nonce » est de même valeur dans les différents messages JOIN-REQ ainsi reçus. Le cinquième serveur JS 160 est alors en charge d'effectuer la déduplication des messages JOIN-REQ ainsi reçus et de décider à quelle passerelle de collecte répondre parmi les passerelles de collecte ayant relayé le message JOIN-REQ. Dans un mode de réalisation particulier, le cinquième serveur JS 160 répond à la toute première passerelle de collecte qui lui a relayé le message JOIN-REQ. En variante, le cinquième serveur JS 160 répond à une passerelle de collecte sélectionnée aléatoirement parmi les passerelles de collecte ayant relayé le message JOIN-REQ. Dans une autre variante, chaque passerelle de collecte relayant le message JOIN-REQ indique en association un indicateur de force de réception de signal RSSI (« Received Signal Strength Indicator » en anglais) en provenance du dispositif terminal 110, et le cinquième serveur JS 160 répond à la passerelle de collecte qui fournit le meilleur indicateur de force de réception de signal en provenance du dispositif terminal 110.

Ainsi, en assurant les communications directement entre les passerelles de collecte 120, 121, 122 du premier opérateur et le cinquième serveur JS 160 du second opérateur, la latence entre la transmission du message JOIN-REQ par le dispositif terminal 110 en itinérance et la réception du message JOIN-ACC par ledit dispositif terminal 110 est réduite.

Lorsque le dispositif terminal 110 a reçu le message JOIN-ACC qui confirme que l'authentification a réussi, le dispositif terminal 110 a rejoint le système de communication. Le dispositif terminal 110 est alors autorisé à effectuer des communications ascendantes à destination du quatrième serveur AS 150 et à recevoir des communications descendantes de la part du réseau cœur. Les communications entre le dispositif terminal 110 et le quatrième serveur AS 150 sont effectuées par relais successifs des premier FNS 130, second SNS 131 et troisième HNS 140 serveurs jusqu'au quatrième serveur AS 150.

Lorsque les communications sont chiffrées, les communications ascendantes sont authentifiées par le réseau cœur du premier réseau grâce aux clefs de sécurité fournies par le cinquième serveur JS 160, typiquement par le second serveur SNS 131 après relais par le premier serveur FNS 130. Le contenu des communications ascendantes est alors relayé par le second serveur SNS 131 au troisième serveur HNS 140 qui relaie ensuite ledit contenu au quatrième serveur AS 150 pour traitement applicatif. En charge de la gestion de la couche MAC, le second serveur SNS 131 assure l'acquittement des trames ascendantes en provenance du dispositif terminal 110 en itinérance et relaie jusqu'audit dispositif terminal 110 les données reçues en provenance du quatrième serveur AS 150 à l'attention dudit dispositif terminal 110 en itinérance et, le cas échéant, effectue le chiffrement des trames descendantes.

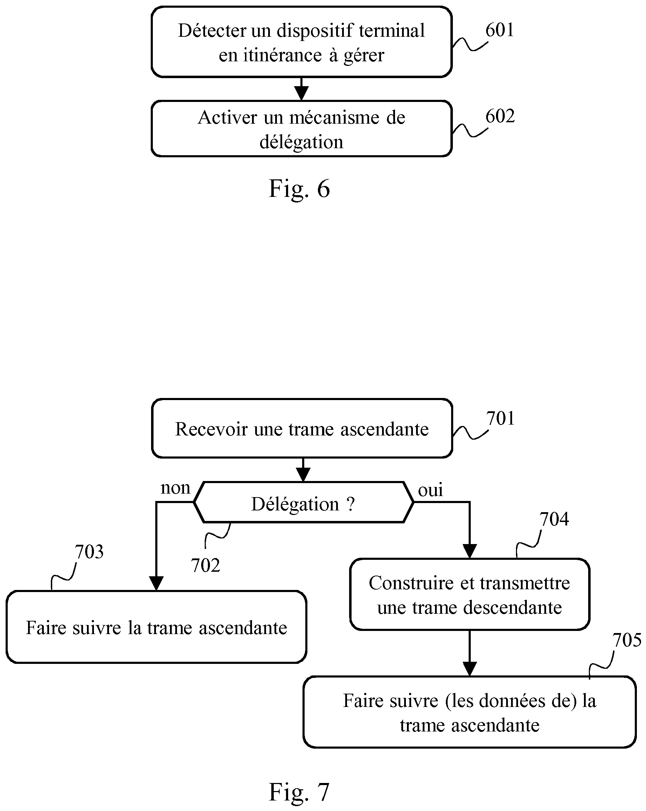

Les questions de latence sont moins prépondérantes dans le cas du traitement desdites trames ascendantes car il n'y a pas d'intervention du cinquième serveur JS 160 dont les traitements, notamment pour l'authentification et l'obtention des clefs de sécurité, ont un impact significatif au moment où le dispositif terminal rejoint le système de communication. Un mode de réalisation particulier permet toutefois d'améliorer aussi la latence dans le cadre du traitement des trames ascendantes et de la gestion des trames descendantes. La gestion des acquittements des trames ascendantes est alors notamment confiée à une passerelle de collecte. On parle alors de « délégation ». Cette approche par délégation est particulièrement avantageuse dans le cas des dispositifs terminaux qui écoutent le médium de communication essentiellement pendant des fenêtres de réception définies d'après des instants de transmissions de leurs trames ascendantes, c'est-à-dire les dispositifs terminaux de « Classe A » et de « Classe B » dans les spécifications LoRaWAN 1.1. Cet aspect est détaillé ci-après en relation avec les Figs. 6 à 8.

La **Fig. 5** illustre schématiquement un exemple d'architecture matérielle d'un dispositif de communication du système de communication de la Fig. 3. Chaque dispositif terminal et/ou chaque passerelle de collecte et/ou chaque serveur de réseau cœur peuvent être construits sur la base d'une telle architecture matérielle.

Le dispositif de communication comporte, reliés par un bus de communication 510 : un processeur ou CPU (« Central Processing Unit » en anglais) 501 ; une mémoire vive RAM (« Random Access Memory » en anglais) 502 ; une mémoire morte ROM (« Read Only Memory » en anglais) 503 ; une unité de stockage ou un lecteur de support de stockage, comme un lecteur de cartes SD (« Secure Digital » en anglais) 504 ou un disque dur HDD (« Hard Disk Drive » en anglais) ; une interface de communication IF1 505, et éventuellement une autre interface de communication IF2 506.

Lorsque le dispositif de communication de la Fig. 5 représente un dispositif terminal, l'interface de communication IF1 505 est configurée pour permettre audit dispositif terminal de communiquer avec des passerelles de collecte.

Lorsque le dispositif de communication de la Fig. 5 représente une passerelle de collecte, l'interface de communication IF1 505 est configurée pour permettre à ladite passerelle de collecte de communiquer avec des dispositifs terminaux, et l'autre interface de communication IF2 506 est configurée pour permettre à ladite passerelle de collecte de communiquer avec des serveurs de réseau cœur.

Lorsque le dispositif de communication de la Fig. 5 représente un serveur de réseau cœur, l'interface de communication IF1 505 est configurée pour permettre audit serveur de réseau cœur de communiquer avec au moins un autre serveur de réseau cœur et éventuellement avec des passerelles de collecte d'une manière compatible avec l'interface de communication IF2 506 des passerelles de collecte. Les interfaces de communication IF1 505 et IF2 506 peuvent être dans ce cas des interfaces physiques ou des interfaces logiques.

Le processeur 501 est capable d'exécuter des instructions chargées dans la mémoire RAM 502 à partir de la mémoire ROM 503, d'une mémoire externe, d'un support de stockage, ou d'un réseau de communication. Lorsque le dispositif de communication en question est mis sous tension, le processeur 501 est capable de lire de la mémoire RAM 502 des instructions et de les exécuter. Ces instructions forment un programme d'ordinateur causant la mise en œuvre, par le processeur 501, de tout ou partie des algorithmes et étapes décrits ici en relation avec le dispositif de communication en question.

Ainsi, tout ou partie des algorithmes et étapes décrits ici peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits ici peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif de communication en question comporte de la circuiterie électronique adaptée et configurée pour implémenter les algorithmes et étapes décrits ici en relation avec le dispositif de communication en question.

La **Fig. 6** illustre schématiquement un algorithme d'activation de délégation vis-à-vis d'un dispositif terminal en itinérance, dans un mode de réalisation particulier. L'algorithme de la Fig. 6 est implémenté par chaque passerelle de collecte 120, 121, 122. Considérons à titre illustratif que l'algorithme de la Fig. 6 est implémenté par la passerelle de collecte 120.

Dans une étape 601, la passerelle de collecte 120 détecte un dispositif terminal en itinérance à gérer. C'est le cas lorsque la passerelle de collecte 120 a transmis un message JREQ au cinquième serveur JS 160 pour ledit dispositif terminal en itinérance et a reçu en retour un message JANS de la part du cinquième serveur JS 160. On peut alors parler de « passerelle de collecte élue » puisqu'elle a été sélectionnée, ici par le cinquième serveur JS 160, pour la mise en place de la délégation. Un autre cas apparaît lorsque le premier serveur FNS 130 décide ultérieurement de confier la délégation à une autre passerelle de collecte, auquel cas le premier serveur FNS 130 en informe la passerelle de collecte à laquelle la délégation était jusqu'alors confiée, en attend un acquittement, et envoie à cette autre passerelle de collecte un ordre d'activation de la délégation pour ledit dispositif terminal en itinérance. En effet, la délégation vis-à-vis d'un dispositif terminal ne peut être confiée qu'à une seule passerelle de collecte à la fois, pour éviter tout conflit d'acquittement de trame ascendante.

Dans une étape 602, la passerelle de collecte 120 active en interne la délégation pour le dispositif terminal en itinérance en question. La passerelle de collecte 120 garde ainsi trace de devoir acquitter, pour le compte du réseau cœur du premier réseau, les trames ascendantes reçues dudit dispositif terminal en itinérance.

Dans le cadre de l'activation de la délégation, la passerelle de collecte 120 initialise un tampon (« buffer » en anglais) dédié aux transmissions descendantes à destination du dispositif terminal en question. Ce tampon est donc affecté audit dispositif terminal en itinérance et permet de rendre asynchrones, du point de vue du réseau cœur, les transmissions descendantes à destination dudit dispositif terminal en itinérance par rapport aux transmissions ascendantes en provenance dudit dispositif terminal en itinérance. Dans le cas où le premier serveur FNS 130 cherche à confier la délégation à une autre passerelle de collecte, la passerelle de collecte 120 vérifie si le tampon associé à la délégation en question est vide ou pas. En d'autres termes, la passerelle de collecte 120 vérifie si des données utiles à l'attention du dispositif terminal en itinérance en question sont encore en attente de transmission. Si le tampon est vide, la passerelle de collecte 120 est autorisée à désactiver la délégation et envoyer un acquittement au premier serveur FNS 130 ; sinon, la passerelle de collecte 120 doit continuer d'acquitter les trames ascendantes en provenance dudit dispositif terminal en itinérance jusqu'à ce que le tampon devienne vide. Une fois le tampon vide, la passerelle de collecte 120 arrête d'acquitter les trames ascendantes en provenance dudit dispositif terminal en itinérance, transmet l'acquittement au premier serveur FNS 130, et libère le tampon qui était affecté à la délégation en question. Dans certains modes de réalisation, des compteurs de trames ascendantes sont maintenus par les dispositifs terminaux et des compteurs de trames descendantes sont maintenus par le réseau cœur. Les valeurs courantes de ces compteurs sont indiquées respectivement dans des champs dédiés des trames ascendantes et des trames descendantes. Dans le cas d'une délégation, le compteur de trames descendantes associé au dispositif terminal en itinérance auquel la délégation s'applique est maintenu par la passerelle de collecte élue. Alors, dans l'acquittement transmis au premier serveur FNS 130, la passerelle de collecte 120 inclut la valeur du compteur de trames descendantes. Le premier serveur FNS 130 en informe l'autre passerelle de collecte à laquelle la délégation est confiée, de manière que cette autre passerelle de collecte puisse assurer la continuité du comptage des trames descendantes. Cela permet d'assurer que la délégation reste transparente pour ledit dispositif terminal en itinérance.

La **Fig. 7** illustre schématiquement un algorithme de traitement de trame ascendante. L'algorithme de la Fig. 7 est implémenté par chaque passerelle de collecte 120, 121, 122, dans un mode de réalisation particulier. Considérons à titre illustratif que l'algorithme de la Fig. 7 est implémenté par la passerelle de collecte 120.

Dans une étape 701, la passerelle de collecte 120 reçoit une trame ascendante en provenance d'un dispositif terminal. La trame ascendante précise l'adresse du dispositif terminal duquel ladite trame ascendante émane.

Dans une étape 702, la passerelle de collecte 120 vérifie si le dispositif terminal est un dispositif terminal en itinérance pour lequel la délégation a été activée auprès de la passerelle de collecte 120. Si tel est le cas, une étape 704 est effectuée ; sinon, une étape 703 est effectuée.

Dans l'étape 703, la passerelle de collecte 120 fait suivre la trame ascendante au réseau cœur, à savoir au premier serveur FNS 130, de sorte que ladite trame ascendante puisse parvenir au quatrième serveur AS 150 afin d'en traiter le contenu applicatif. La passerelle de collecte 120 sert ici simplement de relais et garde temporairement trace qu'un retour est attendu du réseau cœur vis-à-vis de ladite trame ascendante, au moins pour acquitter ladite trame ascendante et éventuellement pour fournir des données utiles complémentaires.

La passerelle de collecte 120 garde trace de la réception de ladite trame ascendante et de l'instant auquel ladite trame ascendante a été reçue, de manière à pouvoir ultérieurement déterminer à quel moment transmettre en réponse une trame descendante comportant, au moins, un acquittement de ladite trame ascendante. Lorsque la passerelle de collecte 120 reçoit ultérieurement du réseau cœur la trame descendante à faire suivre au dispositif terminal en question en réponse à ladite trame ascendante, le réseau cœur fournit une information temporelle représentative d'une durée et la passerelle de collecte 120 ajoute ladite durée à l'instant auquel ladite trame ascendante a été reçue, pour déterminer à quel moment transmettre ladite trame descendante.

En variante, la passerelle de collecte 120 programme (« schedule » en anglais) au moins une fenêtre de réception pour ledit dispositif terminal, dans laquelle la passerelle de collecte 120 est supposée relayer une trame descendante qui sera ultérieurement fournie par le réseau cœur. La passerelle de collecte 120 surveille alors de recevoir une trame descendante à faire suivre au dispositif terminal en question en réponse à ladite trame ascendante dans des délais appropriés pour respecter une dite fenêtre de réception ainsi programmée.

Dans l'étape 704, la passerelle de collecte 120 doit acquitter, pour le compte du réseau cœur, la trame ascendante reçue à l'étape 701. Cela signifie que le dispositif terminal concerné est en itinérance et que la passerelle de collecte 120 possède la délégation pour anticiper les acquittements à destination dudit dispositif terminal. Lorsque l'acquittement doit se faire dans une dite fenêtre de réception définie d'après un instant de transmission de ladite trame ascendante, la passerelle de collecte 120 s'assure que ledit dispositif terminal est à l'écoute du medium de communication. La passerelle de collecte 120 vérifie si le tampon associé audit dispositif terminal contient des données utiles fournies par le réseau cœur à l'attention dudit dispositif terminal. Si le tampon ne contient pas de telles données utiles, la passerelle de collecte 120 construit une trame descendante incluant l'acquittement susmentionné et transmet la trame descendante ainsi construite à destination dudit dispositif terminal au moment opportun. Sinon, la passerelle de collecte 120 construit une trame descendante incluant l'acquittement susmentionné et incluant aussi des données stockées dans le tampon. Ces données sont alors effacées du tampon, et la passerelle de collecte 120 transmet la trame descendante ainsi construite à destination dudit dispositif terminal au moment opportun, et l'étape 705 est ensuite effectuée.

Dans le mode de réalisation particulier où les communications avec le dispositif terminal en question sont chiffrées, la passerelle de collecte 120 authentifie le dispositif terminal en décodant un code d'intégrité inclus dans la trame ascendante reçue à l'étape 701 grâce aux clefs de sécurité associées audit dispositif terminal. Ce code d'intégrité est appelé MIC (« Message Integrity Code » en anglais) dans les spécifications LoRaWAN 1.1. Si l'authentification échoue, la passerelle de collecte 120 jette la trame ascendante et interrompt l'exécution de l'algorithme de la Fig. 7. De plus, lorsque la passerelle de collecte 120 doit chiffrer la trame descendante construite, la passerelle de collecte 120 utilise les clefs de sécurité associées audit dispositif terminal en itinérance pour chiffrer ladite trame descendante, avant de transmettre ladite trame descendante sous forme chiffrée. La trame descendante sous forme chiffrée inclut alors aussi un code d'intégrité authentifiant le réseau cœur, pour le compte duquel la passerelle de collecte 120 agit.

Dans l'étape 705, la passerelle de collecte 120 fait suivre au réseau cœur la trame ascendante ou les données contenues de la trame ascendante, de sorte que ladite trame ascendante puisse parvenir au quatrième serveur AS 150 afin d'en traiter le contenu. La passerelle de collecte 120 peut aussi uniquement relayer les données hors délégation. On entend par données hors délégation les données qui ne concernent pas une fonctionnalité déléguée à la passerelle de collecte 120. La passerelle de collecte 120 peut ainsi par exemple ne pas propager le code d'intégrité contenu dans la trame ascendante reçue dudit dispositif terminal en itinérance. Ces données peuvent être chiffrées par la passerelle de collecte 120 grâce à une clef de sécurité connue aussi du premier serveur FNS 130, par exemple en utilisant un tunnel sécurisé.

On remarque, au vu de l'algorithme de la Fig. 7, que les données contenues dans une trame ascendante peuvent être relayées par plusieurs passerelles de collecte qui capteraient la trame ascendante en question. Il est alors à la charge du premier serveur FNS 130 d'effectuer toute déduplication appropriée de données.

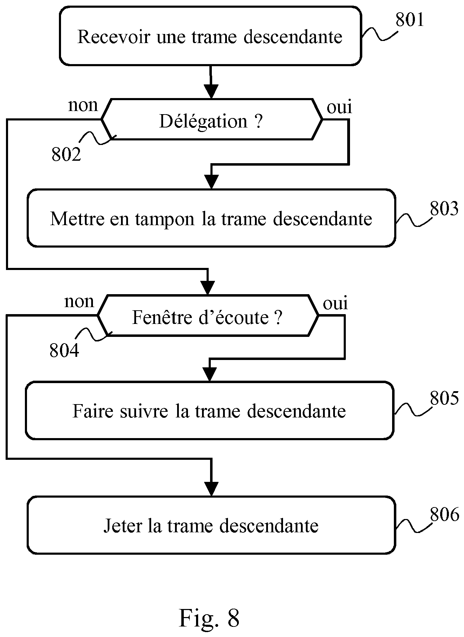

La **Fig. 8** illustre schématiquement un algorithme de traitement de trame descendante. L'algorithme de la Fig. 8 est implémenté par chaque passerelle de collecte 120, 121, 122. Considérons à titre illustratif que l'algorithme de la Fig. 8 est implémenté par la passerelle de collecte 120.

Dans une étape 801, la passerelle de collecte 120 reçoit une trame descendante en provenance du réseau cœur. La trame descendante précise l'adresse du dispositif terminal auquel ladite trame descendante est destinée.

Dans une étape 802, la passerelle de collecte 120 vérifie si la délégation a été activée vis-à-vis dudit dispositif terminal (auquel cas le dispositif terminal en question est en itinérance) ou pas. Si tel est le cas, une étape 803 est effectuée ; sinon, une étape 804 est effectuée.

Dans l'étape 803, la passerelle de collecte 120 met les données contenues dans la trame descendante reçue à l'étape 801 dans le tampon associé au dispositif terminal en itinérance auquel lesdites données sont destinées. On peut parler alors de « données utiles » (« useful data » en anglais) à l'attention dudit dispositif terminal en itinérance. La trame descendante reçue à l'étape 801 a alors typiquement un format autre que les trames descendantes transmises par le premier serveur FNS 130 lorsque le mécanisme de délégation n'est pas activé, puisqu'au moins les acquittements ne sont pas gérés par le réseau cœur lorsque le mécanisme de délégation est activé. La passerelle de collecte 120 enverra ultérieurement les données utiles ainsi reçues du réseau cœur à l'attention du dispositif terminal en question, lorsqu'une fenêtre de réception le permettra, plus particulièrement en réponse à une prochaine transmission ascendante de la part dudit dispositif terminal en itinérance.

Dans l'étape 804, la passerelle de collecte 120 doit assurer le relais de la trame descendante reçue à l'étape 801. Etant donné que la délégation n'est pas activée, la passerelle de collecte 120 peut effectuer le relais vers le dispositif terminal en question uniquement s'il reste au moins une fenêtre de réception à venir d'après la trame ascendante qui a déclenché l'envoi de ladite trame descendante par le réseau cœur. En d'autres termes, la passerelle de collecte 120 vérifie si ladite passerelle de collecte 120 avait gardé une trace qu'un retour était attendu du réseau cœur vis-à-vis d'une trame ascendante précédemment reçue dudit dispositif terminal. Si tel est le cas, une étape 805 est effectuée ; sinon, une étape 806 est effectuée.

Dans l'étape 805, la passerelle de collecte 120 fait suivre la trame descendante reçue à l'étape 801 dans une dite fenêtre de réception définie d'après un instant de transmission de la trame ascendante qui a déclenché l'envoi de ladite trame descendante par le réseau cœur.

Dans l'étape 806, la passerelle de collecte 120 est hors délai pour pouvoir relayer la trame descendante au dispositif terminal en question. La passerelle de collecte 120 jette donc la trame descendante. Il est alors de la responsabilité du réseau cœur de retransmettre ultérieurement les données utiles qui étaient contenues dans ladite trame descendante.

On voit aussi de ce qui précède que transférer une partie des fonctionnalités de contrôle de la couche MAC du serveur SNS 131 vers les passerelles de collecte 120, 121, 122 constitue une amélioration significative en termes de latence dans des situations d'itinérance par transfert multi-réseaux dans un contexte de réseaux de communication de type LPWAN interconnectés.

On voit aussi de ce qui précède que, bien qu'il ne soit pas nécessaire d'implémenter les formats de messages définis dans le protocole LoRaWAN pour bénéficier des avantages de l'invention, les dispositifs et procédés décrits sont largement compatibles avec les spécifications LoRaWAN 1.1 et en constituent une amélioration significative en termes de latence.

## Revendications

1. Procédé de gestion d'itinérance par transfert multi-réseaux dans un système de communication comportant un premier réseau de type LPWAN d'un premier opérateur et un second réseau de type LPWAN d'un second opérateur, le premier réseau comportant :
- des passerelles de collecte (120, 121, 122),
- un premier serveur (130) en charge de gérer lesdites passerelles de collecte (120, 121, 122), et
- un second serveur (131), couplé au premier serveur (130), en charge de contrôler la couche MAC pour des dispositifs terminaux (110) communiquant via lesdites passerelles de collecte (120, 121, 122),
le second réseau comportant :
- un troisième serveur (140) en charge d'interfacer un quatrième serveur (150) et un cinquième serveur (160) avec le second serveur (131) du premier réseau,
- le quatrième serveur (150), qui implémente une application avec laquelle au moins un dispositif terminal (110) du second opérateur échange des données applicatives dans le cadre d'une souscription de services définie auprès du second opérateur, et
- le cinquième serveur (160), en charge d'authentifier tout dispositif terminal (110) cherchant à rejoindre le système de communication pour bénéficier des services du quatrième serveur (150),
le procédé étant tel que le système de communication transporte des trames ascendantes incluant des données applicatives depuis ledit au moins un dispositif terminal (110) du second opérateur jusqu'au quatrième serveur (150) par relais successifs des premier (130), second (131) et troisième (140) serveurs lorsque ledit au moins un dispositif terminal (110) du second opérateur est authentifié et en outre que lesdites trames ascendantes sont captées par au moins une passerelle de collecte (120, 121, 122) du premier réseau,
le procédé étant **caractérisé en ce que** chaque passerelle de collecte (120, 121, 122) du premier réseau ayant détecté un dispositif terminal (110) du second opérateur demandant à rejoindre le système de communication pour bénéficier des services du quatrième serveur (150) communique avec le cinquième serveur (160) pour authentifier ledit dispositif terminal (110) du second opérateur détecté, en court-circuitant les premier (130), second (131) et troisième (140) serveurs ;
et **en ce que**, le premier réseau disposant d'une plage d'adresses pour tous les dispositifs terminaux (110) accédant au système de communication via les passerelles de collecte (120, 121, 122) du premier réseau, le cinquième serveur (160) gère un sous-ensemble prédéterminé d'adresses de la plage d'adresses du premier réseau et attribue une adresse parmi ledit sous-ensemble prédéterminé d'adresses à tout dispositif terminal (110) du second opérateur qui est en itinérance par transfert multi-réseaux via le premier réseau et qui est authentifié par le cinquième serveur (160).

2. Procédé selon la revendication 1, **caractérisé en ce que**, les communications avec chaque dispositif terminal (110) authentifié du second opérateur étant chiffrées, le cinquième serveur (160) fournit les clefs de sécurité nécessaires auxdites communications chiffrées, et lorsqu'une passerelle de collecte (120, 121, 122) du premier réseau reçoit (403) un message du cinquième serveur (160) indiquant qu'un dispositif terminal (110) du second opérateur a été authentifié avec succès et incluant lesdites clefs de sécurité, ladite passerelle de collecte (120, 121, 122) du premier réseau relaie (405) les clefs de sécurité au premier serveur (130).

3. Procédé selon la revendication 2, **caractérisé en ce que** le premier serveur (130) relaie les clefs de sécurité au second serveur (131).

4. Procédé selon l'une quelconque des revendications 1 à 3, **caractérisé en ce que**, pour demander à rejoindre le système de communication pour bénéficier des services du quatrième serveur (150), chaque dispositif terminal (110) du second opérateur envoie (401) un message incluant un identifiant qui identifie de manière unique le cinquième serveur (160), et **en ce que** chaque passerelle de collecte (120, 121, 122) du premier réseau captant ledit message détermine à quelle adresse contacter le cinquième serveur (160) grâce à une association préalablement stockée en mémoire entre ledit identifiant et l'adresse pour contacter le cinquième serveur (160).

5. Procédé selon la revendication 4, **caractérisé en ce que**, sur configuration de chaque passerelle de collecte (120, 121, 122) du premier réseau avec l'identifiant qui identifie de manière unique le cinquième serveur (160), ladite passerelle de collecte (120, 121, 122) du premier réseau demande à un sixième serveur, en charge d'effectuer des résolutions de noms de domaine, de fournir l'adresse pour contacter le cinquième serveur (160) grâce audit identifiant qui identifie de manière unique le cinquième serveur (160).

6. Procédé selon la revendication 5, **caractérisé en ce que**, sur configuration du premier serveur (130) avec l'identifiant qui identifie de manière unique le cinquième serveur (160), le premier serveur (130) demande à un sixième serveur, en charge d'effectuer des résolutions de noms de domaine, de fournir l'adresse pour contacter le cinquième serveur (160) grâce audit identifiant qui identifie de manière unique le cinquième serveur (160), et le premier serveur (130) propage une association dudit identifiant et de ladite adresse à chaque passerelle de collecte (120, 121, 122) du premier réseau.

7. Procédé selon l'une quelconque des revendications 1 à 6, **caractérisé en ce que**, lorsque le cinquième serveur (160) reçoit plusieurs copies d'un même message qui émane d'un dispositif terminal (110) du second opérateur et qui demande à rejoindre le système de communication, le cinquième serveur (160) effectue une déduplication de données et répond à la première copie en séquence dudit message.

8. Procédé selon l'une quelconque des revendications 1 à 7, **caractérisé en ce que**, lorsqu'une passerelle de collecte (120, 121, 122) du premier réseau reçoit un message du cinquième serveur (160) indiquant qu'un dispositif terminal (110) du second opérateur a été authentifié avec succès, ladite passerelle de collecte (120, 121, 122) du premier réseau active une délégation (602) et notifie en conséquence le premier serveur (130), la délégation comportant les étapes suivantes :
- affecter un tampon audit dispositif terminal (110) du second opérateur et y stocker des données utiles ultérieurement reçues de manière asynchrone via le premier serveur (130) à l'attention dudit dispositif terminal (110) du second opérateur ; et
- acquitter toute trame ascendante ultérieurement reçue (701) depuis ledit dispositif terminal (110) du second opérateur en construisant et en transmettant (704), pour le compte du second serveur (131), des trames descendantes incluant des acquittements respectifs desdites trames ascendantes et incluant, le cas échéant, des données utiles stockées dans le tampon affecté audit dispositif terminal (110) du second opérateur ; et
- relayer (705) la trame ascendante vers le premier serveur,
et sur réception (801) d'une trame descendante à l'attention dudit dispositif terminal (110) du second opérateur :
- placer (803) les données utiles, fournies dans la trame descendante, dans le tampon affecté audit dispositif terminal (110) du second opérateur.

9. Procédé selon la revendication 8, **caractérisé en ce que** chaque passerelle de collecte (120, 121, 122) du premier réseau qui reçoit, en provenance du premier serveur (130), un ordre de désactivation de la délégation vis-à-vis d'un dispositif terminal (110) du second opérateur effectue les étapes suivantes :
- si le tampon affecté audit dispositif terminal (110) du second opérateur est vide, confirmer auprès du premier serveur (130) que ladite passerelle de collecte (120, 121, 122) du premier réseau a désactivé la délégation vis-à-vis dudit dispositif terminal (110) du second opérateur ;
- si le tampon affecté audit dispositif terminal (110) du second opérateur n'est pas vide, maintenir la délégation jusqu'à ce que ledit tampon soit vidé par construction et transmission de dites trames descendantes par ladite passerelle de collecte (120, 121, 122) du premier réseau.

10. Procédé selon la revendication 8, **caractérisé en ce que** chaque passerelle de collecte (120, 121, 122) du premier réseau ayant activé la délégation vis-à-vis d'un dispositif terminal (110) du second opérateur incrémente une valeur d'un compteur de trames descendantes au fil des constructions desdites trames descendantes à l'attention dudit dispositif terminal (110) du second opérateur et inclut dans lesdites trames descendantes la valeur incrémentée du compteur de trames descendantes,
et lorsque ladite passerelle de collecte (120, 121, 122) du premier réseau désactive la délégation, ladite passerelle de collecte (120, 121, 122) du premier réseau notifie (405) au premier serveur (130) une valeur à jour du compteur de trames descendantes.

11. Système de communication comportant un premier réseau de type LPWAN d'un premier opérateur et un second réseau de type LPWAN d'un second opérateur, le premier réseau comportant :
- des passerelles de collecte (120, 121, 122),
- un premier serveur (130) en charge de gérer lesdites passerelles de collecte (120, 121, 122), et
- un second serveur (131), couplé au premier serveur (130), en charge de contrôler la couche MAC pour des dispositifs terminaux (110) communiquant via lesdites passerelles de collecte (120, 121, 122),
le second réseau comportant :
- un troisième serveur (140) en charge d'interfacer un quatrième serveur (150) et un cinquième serveur (160) avec le second serveur (131) du premier réseau,
- le quatrième serveur (150), qui implémente une application avec laquelle au moins un dispositif terminal (110) du second opérateur échange des données applicatives dans le cadre d'une souscription de services définie auprès du second opérateur, et
- le cinquième serveur (160), en charge d'authentifier tout dispositif terminal (110) cherchant à rejoindre le système de communication pour bénéficier des services du quatrième serveur (150),
le système de communication étant agencé, dans le cadre d'une gestion d'itinérance par transfert multi-réseaux entre le premier réseau et le second réseau, pour transporter des trames ascendantes incluant des données applicatives depuis ledit au moins un dispositif terminal (110) du second opérateur jusqu'au quatrième serveur (150) par relais successifs des premier (130), second (131) et troisième (140) serveurs lorsque ledit au moins un dispositif terminal (110) du second opérateur est authentifié et en outre que lesdites trames ascendantes sont captées par au moins une passerelle de collecte (120, 121, 122) du premier réseau,
le système de communication étant **caractérisé en ce que** chaque passerelle de collecte (120, 121, 122) du premier réseau ayant détecté un dispositif terminal (110) du second opérateur demandant à rejoindre le système de communication pour bénéficier des services du quatrième serveur (150) est agencée pour communiquer avec le cinquième serveur (160) pour authentifier ledit dispositif terminal (110) du second opérateur détecté, en court-circuitant les premier (130), second (131) et troisième (140) serveurs ;
et **en ce que**, le premier réseau disposant d'une plage d'adresses pour tous les dispositifs terminaux (110) accédant au système de communication via les passerelles de collecte (120, 121, 122) du premier réseau, le cinquième serveur (160) est agencé pour gérer un sous-ensemble prédéterminé d'adresses de la plage d'adresses du premier réseau et attribue une adresse parmi ledit sous-ensemble prédéterminé d'adresses à tout dispositif terminal (110) du second opérateur qui est en itinérance par transfert multi-réseaux via le premier réseau et qui est authentifié par le cinquième serveur (160).

## Patentansprüche

1. Verfahren zur Verwaltung von Roaming durch Multinetz-Transfer in einem Kommunikationssystem, das ein erstes LPWAN-Netz eines ersten Betreibers und ein zweites LPWAN-Netz eines zweiten Betreibers aufweist, wobei das erste Netz Folgendes aufweist:
- Sammel-Gateways (120, 121, 122),
- einen ersten Server (130), der dafür zuständig ist, die Sammel-Gateways (120, 121, 122) zu verwalten, und
- einen zweiten Server (131), der an den ersten Server (130) gekoppelt ist, der dafür zuständig ist, die MAC-Schicht für Endgerätvorrichtungen (110) zu steuern, die über die Sammel-Gateways (120, 121, 122) kommunizieren,
wobei das zweite Netz Folgendes aufweist:
- einen dritten Server (140), der dafür zuständig ist, einen vierten Server (150) und einen fünften Server (160) an den zweiten Server (131) des ersten Netzes anzubinden,
- den vierten Server (150), der eine Anwendung implementiert, mit der mindestens eine Endgerätvorrichtung (110) des zweiten Betreibers Anwendungsdaten im Rahmen einer Dienste-Subskribierung austauscht, die beim zweiten Betreiber definiert ist, und
- den fünften Server (160), der dafür zuständig ist, jede Endgerätvorrichtung (110) zu authentifizieren, die versucht, am Kommunikationssystem teilzunehmen, um Nutzen aus den Diensten des vierten Servers (150) zu ziehen,
wobei das Verfahren so ausgelegt ist, dass das Kommunikationssystem Aufwärtsrahmen mit Anwendungsdaten von der mindestens einen Endgerätvorrichtung (110) des zweiten Betreibers bis zum vierten Server (150) über aufeinanderfolgende Relais des ersten (130), zweiten (131) und dritten (140) Servers transportiert, wenn die mindestens eine Endgerätvorrichtung (110) des zweiten Betreibers authentifiziert ist, und ferner, dass die Aufwärtsrahmen von mindestens einem Sammel-Gateway (120, 121, 122) des ersten Netzes erfasst werden,
wobei das Verfahren **dadurch gekennzeichnet ist, dass** jeder Sammel-Gateway (120, 121, 122) des ersten Netzes, der eine Endgerätvorrichtung (110) des zweiten Betreibers festgestellt hat, die anfordert, am Kommunikationssystem teilzunehmen, um Nutzen aus den Diensten des vierten Servers (150) zu ziehen, unter Umgehung des ersten (130), zweiten (131) und dritten (140) Servers mit dem fünften Server (160) kommuniziert, um die festgestellte Endgerätvorrichtung (110) des zweiten Betreibers zu authentifizieren;
und dadurch, dass, wobei das erste Netz über einen Adressbereich für alle Endgerätvorrichtungen (110) verfügt, die über die Sammel-Gateways (120, 121, 122) des ersten Netzes auf das Kommunikationssystem zugreifen, der fünfte Server (160) eine vorbestimmte Teilmenge von Adressen des Adressbereichs des ersten Netzes verwaltet und jeder Endgerätvorrichtung (110) des zweiten Betreibers, die sich im Roaming durch Multinetz-Transfer über das erste Netz befindet und die durch den fünften Server (160) authentifiziert ist, eine Adresse aus der vorbestimmten Teilmenge von Adressen zuweist.

2. Verfahren nach Anspruch 1, **dadurch gekennzeichnet, dass**, wobei die Kommunikationen mit jeder authentifizierten Endgerätvorrichtung (110) des zweiten Betreibers verschlüsselt sind, der fünfte Server (160) die Sicherheitsschlüssel bereitstellt, die für die verschlüsselten Kommunikationen nötig sind, und, wenn ein Sammel-Gateway (120, 121, 122) des ersten Netzes eine Nachricht vom fünften Server (160) empfängt (403), die angibt, dass eine Endgerätvorrichtung (110) des zweiten Betreibers erfolgreich authentifiziert wurde, und die Sicherheitsschlüssel aufweist, der Sammel-Gateway (120, 121, 122) des ersten Netzes die Sicherheitsschlüssel an den ersten Server (130) weiterleitet (405).

3. Verfahren nach Anspruch 2, **dadurch gekennzeichnet, dass** der erste Server (130) die Sicherheitsschlüssel an den zweiten Server (131) weiterleitet.

4. Verfahren nach einem der Ansprüche 1 bis 3, **dadurch gekennzeichnet, dass**, zur Anforderung, am Kommunikationssystem teilzunehmen, um Nutzen aus den Diensten des vierten Servers (150) zu ziehen, jede Endgerätvorrichtung (110) des zweiten Betreibers eine Nachricht sendet (401), die eine Kennung aufweist, die den fünften Server (160) eindeutig identifiziert, und dadurch, dass jeder Sammel-Gateway (120, 121, 122) des ersten Netzes, der die Nachricht erfasst, mithilfe einer Zuordnung zwischen der Kennung und der Adresse zur Kontaktierung des fünften Servers (160), die zuvor gespeichert wurde, bestimmt, an welcher Adresse der fünfte Server (160) zu kontaktieren ist.

5. Verfahren nach Anspruch 4, **dadurch gekennzeichnet, dass** bei Konfiguration jedes Sammel-Gateways (120, 121, 122) des ersten Netzes mit der Kennung, die den fünften Server (160) eindeutig identifiziert, der Sammel-Gateway (120, 121, 122) des ersten Netzes einen sechsten Server, der dafür zuständig ist, Domainnamenauflösungen durchzuführen, dazu auffordert, die Adresse zur Kontaktierung des fünften Servers (160) mithilfe der Kennung bereitzustellen, die den fünften Server (160) eindeutig identifiziert.

6. Verfahren nach Anspruch 5, **dadurch gekennzeichnet, dass** bei Konfiguration des ersten Servers (130) mit der Kennung, die den fünften Server (160) eindeutig identifiziert, der erste Server (130) einen sechsten Server, der dafür zuständig ist, Domainnamenauflösungen durchzuführen, dazu auffordert, die Adresse zur Kontaktierung des fünften Servers (160) mithilfe der Kennung bereitzustellen, die den fünften Server (160) eindeutig identifiziert, und der erste Server (130) eine Zuordnung der Kennung und der Adresse an jeden Sammel-Gateway (120, 121, 122) des ersten Netzes weitergibt.

7. Verfahren nach einem der Ansprüche 1 bis 6, **dadurch gekennzeichnet, dass**, wenn der fünfte Server (160) mehrere Kopien einer selben Nachricht empfängt, die von einer Endgerätvorrichtung (110) des zweiten Betreibers stammt und die anfordert, am Kommunikationssystem teilzunehmen, der fünfte Server (160) eine Datendeduplizierung durchführt und auf die erste Kopie in Reihenfolge der Nachricht antwortet.

8. Verfahren nach einem der Ansprüche 1 bis 7, **dadurch gekennzeichnet, dass**, wenn ein Sammel-Gateway (120, 121, 122) des ersten Netzes eine Nachricht vom fünften Server (160) empfängt, die angibt, dass eine Endgerätvorrichtung (110) des zweiten Betreibers erfolgreich authentifiziert wurde, der Sammel-Gateway (120, 121, 122) des ersten Netzes eine Delegation (602) aktiviert und dementsprechend den ersten Server (130) benachrichtigt, wobei die Delegation die folgenden Schritte aufweist:
- Zuteilen eines Puffers an die Endgerätvorrichtung (110) des zweiten Betreibers und Speichern, darin, der Nutzdaten, die später asynchron über den ersten Server (130) empfangen werden, an die Endgerätvorrichtung (110) des zweiten Betreibers; und
- Quittieren jedes Aufwärtsrahmens, der später von der Endgerätvorrichtung (110) des zweiten Betreibers empfangen wird (701), durch Erstellen und Übertragen (704), im Auftrag des zweiten Servers (131), der Abwärtsrahmen, die jeweilige Quittierungen der Aufwärtsrahmen aufweisen und gegebenenfalls Nutzdaten aufweisen, die im Puffer gespeichert sind, der der Endgerätvorrichtung (110) des zweiten Betreibers zugeteilt ist; und
- Weiterleiten (705) des Aufwärtsrahmens zum ersten Server,
und bei Empfang (801) eines Abwärtsrahmens an die Endgerätvorrichtung (110) des zweiten Betreibers:
- Platzieren (803) der Nutzdaten, die im Abwärtsrahmen bereitgestellt sind, in dem Puffer, der der Endgerätvorrichtung (110) des zweiten Betreibers zugeteilt ist.

9. Verfahren nach Anspruch 8, **dadurch gekennzeichnet, dass** jeder Sammel-Gateway (120, 121, 122) des ersten Netzes, der vom ersten Server (130) einen Befehl zur Deaktivierung der Delegation gegenüber einer Endgerätvorrichtung (110) des zweiten Betreibers empfängt, die folgenden Schritte durchführt:
- wenn der Puffer, der der Endgerätvorrichtung (110) des zweiten Betreibers zugeteilt ist, leer ist, Bestätigen gegenüber dem ersten Server (130), das der Sammel-Gateway (120, 121, 122) des ersten Netzes die Delegation gegenüber der Endgerätvorrichtung (110) des zweiten Betreibers deaktiviert hat;
- wenn der Puffer, der der Endgerätvorrichtung (110) des zweiten Betreibers zugeteilt ist, nicht leer ist, Beibehalten der Delegation, bis der Puffer durch Erstellung und Übertragung der Abwärtsrahmen durch den Sammel-Gateway (120, 121, 122) des ersten Netzes geleert ist.

10. Verfahren nach Anspruch 8, **dadurch gekennzeichnet, dass** jeder Sammel-Gateway (120, 121, 122) des ersten Netzes, der die Delegation gegenüber einer Endgerätvorrichtung (110) des zweiten Betreibers aktiviert hat, im Verlauf der Erstellungen der Abwärtsrahmen an die Endgerätvorrichtung (110) des zweiten Betreibers einen Wert eines Abwärtsrahmenzählers inkrementiert und den inkrementierten Wert des Abwärtsrahmenzählers in die Abwärtsrahmen einfügt,
und wenn der Sammel-Gateway (120, 121, 122) des ersten Netzes die Delegation deaktiviert, der Sammel-Gateway (120, 121, 122) des ersten Netzes dem ersten Server (130) einen aktuellen Wert des Abwärtsrahmenzählers mitteilt (405).

11. Kommunikationssystem aufweisend ein erstes LPWAN-Netz eines ersten Betreibers und ein zweites LPWAN-Netz eines zweiten Betreibers, das erste Netz aufweisend:
- Sammel-Gateways (120, 121, 122),
- einen ersten Server (130), der dafür zuständig ist, die Sammel-Gateways (120, 121, 122) zu verwalten, und
- einen zweiten Server (131), der an den ersten Server (130) gekoppelt ist, der dafür zuständig ist, die MAC-Schicht für Endgerätvorrichtungen (110) zu steuern, die über die Sammel-Gateways (120, 121, 122) kommunizieren,
wobei das zweite Netz Folgendes aufweist:
- einen dritten Server (140), der dafür zuständig ist, einen vierten Server (150) und einen fünften Server (160) an den zweiten Server (131) des ersten Netzes anzubinden,
- den vierten Server (150), der eine Anwendung implementiert, mit der mindestens eine Endgerätvorrichtung (110) des zweiten Betreibers Anwendungsdaten im Rahmen einer Dienste-Subskribierung austauscht, die beim zweiten Betreiber definiert ist, und
- den fünften Server (160), der dafür zuständig ist, jede Endgerätvorrichtung (110) zu authentifizieren, die versucht, am Kommunikationssystem teilzunehmen, um Nutzen aus den Diensten des vierten Servers (150) zu ziehen,
wobei das Kommunikationssystem im Rahmen einer Verwaltung von Roaming durch Multinetz-Transfer zwischen dem ersten Netz und dem zweiten Netz angeordnet ist, Aufwärtsrahmen mit Anwendungsdaten von der mindestens einen Endgerätvorrichtung (110) des zweiten Betreibers bis zum vierten Server (150) über aufeinanderfolgende Relais des ersten (130), zweiten (131) und dritten (140) Servers zu transportieren, wenn die mindestens eine Endgerätvorrichtung (110) des zweiten Betreibers authentifiziert ist, und ferner, dass die Aufwärtsrahmen von mindestens einem Sammel-Gateway (120, 121, 122) des ersten Netzes erfasst werden,
wobei das Kommunikationssystem **dadurch gekennzeichnet ist, dass** jeder Sammel-Gateway (120, 121, 122) des ersten Netzes, der eine Endgerätvorrichtung (110) des zweiten Betreibers festgestellt hat, die anfordert, am Kommunikationssystem teilzunehmen, um Nutzen aus den Diensten des vierten Servers (150) zu ziehen, angeordnet ist, unter Umgehung des ersten (130), zweiten (131) und dritten (140) Servers mit dem fünften Server (160) zu kommunizieren, um die festgestellte Endgerätvorrichtung (110) des zweiten Betreibers zu authentifizieren;
und dadurch, dass, wobei das erste Netz über einen Adressbereich für alle Endgerätvorrichtungen (110) verfügt, die über die Sammel-Gateways (120, 121, 122) des ersten Netzes auf das Kommunikationssystem zugreifen, der fünfte Server (160) angeordnet ist, eine vorbestimmte Teilmenge von Adressen des Adressbereichs des ersten Netzes zu verwalten und jeder Endgerätvorrichtung (110) des zweiten Betreibers, die sich im Roaming durch Multinetz-Transfer über das erste Netz befindet und die durch den fünften Server (160) authentifiziert ist, eine Adresse aus der vorbestimmten Teilmenge von Adressen zuweist.

## Claims

1. Method for managing handover roaming in a communication system comprising a first LPWAN network of a first operator and a second LPWAN network of a second operator, the first network comprising:
- gathering gateways (120, 121, 122),
- a first server (130) responsible for managing said gathering gateways (120, 121, 122), and
- a second server (131), coupled to the first server (130), responsible for controlling the MAC layer for end devices (110) communicating via said gathering gateways (120, 121, 122),
the second network comprising:
- a third server (140) responsible for interfacing a fourth server (150) and a fifth server (160) with the second server (131) of the first network,
- the fourth server (150), which implements an application with which at least one end device (110) of the second operator exchanges application data in the context of a defined service subscription with the second operator, and
- the fifth server (160), responsible for authenticating any end device (110) seeking to join the communication system in order to benefit from the services of the fourth server (150),
the method being such that the communication system transports uplink frames including application data from said at least one end device (110) of the second operator to the fourth server (150) by successive relayings of the first (130), second (131) and third (140) servers when said at least one end device (110) of the second operator is authenticated and furthermore said uplink frames are captured by at least one gathering gateway (120, 121, 122) of the first network,
the method being **characterised in that** each gathering gateway (120, 121, 122) of the first network that has detected an end device (110) of the second operator requesting to join the communication system in order to benefit from the services of the fourth server (150) communicates with the fifth server (160) for authenticating said end device (110) of the second operator detected, short-circuiting the first (130), second (131) and third (140) servers;
and **in that**, the first network having a range of addresses for all the end devices (110) accessing the communication system via the gathering gateways (120, 121, 122) of the first network, the fifth server (160) manages a predetermined subset of addresses of the range of addresses of the first network and attributes an address from among said predetermined subset of addresses to any end device (110) of the second operator that is in handover roaming via the first network and is authenticated by the fifth server (160).

2. Method according to claim 1, **characterised in that**, the communications with each authenticated end device (110) of the second operator being encrypted, the fifth server (160) supplies the security keys necessary for said encrypted communications and, when a gathering gateway (120, 121, 122) of the first network receives (403) a message from the fifth server (160) indicating that an end device (110) of the second operator has been successfully authenticated and including said security keys, said gathering gateway (120, 121, 122) of the first network relays (4050) the security keys to the first server (130).

3. Method according to claim 2, **characterised in that** the first server (130) relays the security keys to the second server (131).

4. Method according to any one of claims 1 to 3, **characterised in that**, for requesting to join the communication system in order to benefit from the services of the fourth server (150), each end device (110) of the second operator sends (401) a message including an identifier that uniquely identifies the fifth server (160), and **in that** each gathering gateway (120, 121, 122) of the first network capturing said message determines at which address to contact the fifth server (160) by means of an association previously stored in memory between said identifier and the address for contacting the fifth server (160).

5. Method according to claim 4, **characterised in that**, on configuration of each gathering gateway (120, 121, 122) of the first network with the identifier that uniquely identifies the fifth server (160), said gathering gateway (120, 121, 122) of the first network requests a sixth server, responsible for effecting resolutions of domain names, to supply the address for contacting the fifth server (160) by means of said identifier that uniquely identifies the fifth server (160).

6. Method according to claim 5, **characterised in that**, on configuration of the first server (130) with the identifier that uniquely identifies the fifth server (160), the first server (130) requests a sixth server, responsible for effecting resolutions of domain names, to supply the address for contacting the fifth server (160) by means of said identifier that uniquely identifies the fifth server (160), and the first server (130) propagates an association of said identifier and said address with each gathering gateway (120, 121, 122) of the first network.

7. Method according to any of claims 1 to 6, **characterised in that**, when the fifth server (160) receives a plurality of copies of the same message that emanates from an end device (110) of the second operator and which requests to join the communication system, the fifth server (160) effects a deduplication of data and responds to the first copy in sequence of said message.

8. Method according to any of claims 1 to 7, **characterised in that**, when a gathering gateway (120, 121, 122) of the first network receives a message from the fifth server (160) indicating that an end device (110) of the second operator has been successfully authenticated, said gathering gateway (120, 121, 122) of the first network activates a delegation (602) and notifies the first server (130) accordingly, the delegation comprising the following steps:
- allocating a buffer to said end device (110) of the second operator and storing therein useful data subsequently received asynchronously via the first server (130) for the attention of said end device (110) of the second operator; and
- acknowledging any uplink frame subsequently received (701) from said end device (110) of the second operator by constructing and transmitting (704), on behalf of the second server (131), downlink frames including respective acknowledgements of said uplink frames and, where applicable, including useful data stored in the buffer allocated to said end device (110) of the second operator; and
- relaying (705) the uplink frame to the first server;
and, on reception (801) of a downlink frame for the attention of said end device (110) of the second operator:
- placing (803) the useful data, supplied in the downlink frame, in the buffer allocated to said end device (110) of the second operator.

9. Method according to claim 8, **characterised in that** each gathering gateway (120, 121, 122) of the first network that receives, coming from the first server (130), an instruction to deactivate the delegation vis-a-vis an end device (110) of the second operator performs the following steps:
- if the buffer allocated to the end device (110) of the second operator is empty, confirming with the first server (130) that said gathering gateway (120, 121, 122) of the first network has deactivated the delegation vis-a-vis said end device (110) of the second operator;
- if the buffer allocated to said end device (110) of the second operator is not empty, maintaining the delegation until said buffer is emptied by construction and transmission of said downlink frames by said gathering gateway (120, 121, 122) of the first network.

10. Method according to claim 8, **characterised in that** each gathering gateway (120, 121, 122) of the first network that has activated the delegation vis-a-vis an end device (110) of the second operator increments a value of a downlink-frame counter as said downlink frames are constructed for the attention of said end device (110) of the second operator and includes, in said downlink frames, the incremented value of the downlink-frame counter,
and, when said gathering gateway (120, 121, 122) of the first network deactivates the delegation, said gathering gateway (120, 121, 122) of the first network notifies (405) to the first server (130) an up-to-date value of the downlink frame counter.

11. Communication system comprising a first LPWAN network of a first operator and a second LPWAN network of a second operator, the first network comprising:
- gathering gateways (120, 121, 122),
- a first server (130) responsible for managing said gathering gateways (120, 121, 122), and
- a second server (131), coupled to the first server (130), responsible for controlling the MAC layer for end devices (110) communicating via said gathering gateways,
the second network comprising:
- a third server (140) responsible for interfacing a fourth server (150) and a fifth server (160) with the second server (131) of the first network,
- the fourth server (150), which implements an application with which at least one end device (110) of the second operator exchanges application data in the context of a service subscription defined with the second operator, and
- the fifth server (160), responsible for authenticating any end device (110) seeking to join the communication system in order to benefit from the services of the fourth server (150),
the communication system being arranged, in the context of a management of handover roaming between the first network and the second network, to transport uplink frames including application data from said at least one end device (110) of the second operator to the fourth server (150) by successive relaying s of the first (130), second (131) and third (140) servers when said at least one end device (110) of the second operator is authenticated and furthermore when said uplink frames are captured by at least one gathering gateway (120, 121, 122) of the first network,
the communication system being **characterised in that** each gathering gateway (120, 121, 122) of the first network that has detected an end device (110) of the second operator requesting to join the communication system in order to benefit from the services of the fourth server (150) is arranged to communicate with the fifth server (160) for authenticating said end device (110) of the second operator detected, short-circuiting the first (130), second (131) and third (140) servers;
and **in that**, the first network having a range of addresses for all the end devices (110) accessing the communication system via the gathering gateways (120, 121, 122) of the first network, the fifth server (160) is arranged to manage a predetermined subset of addresses in the range of addresses of the first network and attributes an address from said predetermined subset of addresses to any end device (110) of the second operator that is in handover roaming via the first network and which is authenticated by the fifth server (160).
